# EUROPÄISCHE PATENTSCHRIFT

(11) **EP 3 838 635 B1**
(45) Veröffentlichungstag und Bekanntmachung des Hinweises auf die Patenterteilung: **30.04.2025**
(21) Anmeldenummer: 20213689.1
(22) Anmeldetag: 14.12.2020
(51) Int. Cl.: B60G 17/017, B62D 61/00, B62D 63/06, B60G 17/005

(54) **NIVELLIEREINRICHTUNG UND VERFAHREN ZUM NIVELLIEREN**
LEVELLING DEVICE AND METHOD FOR LEVELLING
DISPOSITIF DE NIVELLEMENT ET PROCÉDÉ DE NIVELLEMENT

(30) Priorität: 16.12.2019 DE 202019106999 U
(43) Veröffentlichungstag der Anmeldung: 23.06.2021
(73) Patentinhaber: Alois Kober GmbH, 89359 Kötz (DE)
(72) Erfinder: Lukas, Maximilian, 89331 Burgau (DE)
(74) Vertreter: ERNICKE Patent- und Rechtsanwälte PartmbB

(56) Entgegenhaltungen:
- EP-A2- 2 308 704
- US-A1- 2019 329 622

## Beschreibung

Die Erfindung betrifft eine Nivelliereinrichtung und ein Nivellierverfahren für Straßenfahrzeuge, insbesondere Anhänger, mit den Merkmalen im Oberbegriff der selbstständigen Ansprüche.

Eine solche Nivelliereinrichtung nebst Nivellierverfahren sind aus der DE 200 03 180 U1 bekannt. Die Nivelliereinrichtung dient zur Ausrichtung des Fahrzeugchassis in einer gewünschte Winkellage im Raum, insbesondere in der Horizontalen. Sie weist eine Nivelliersteuerung, eine die Winkellage des Fahrzeugchassis aufnehmende Nivelliersensorik und eine von der Nivelliersteuerung ansteuerbare bzw. im Einbauzustand angesteuerte sowie angetriebene Hubvorrichtung für eine Höhenbewegung des Chassis beim Nivellieren auf. Die Hubvorrichtung wird von vier oder mehr mechanischen Hubstützen gebildet, die beidseits und in Längsrichtung verteilt an einem Chassis des Straßenfahrzeugs anordenbar bzw. in Einbaustellung angeordnet sind. Das Straßenfahrzeug ist bevorzugt als Anhänger ausgebildet und weist das besagte Chassis sowie eine Achsanordnung mit beidseitigen Fahrzeugrädern und die Nivelliereinrichtung im Einbauzustand auf. Die vorbekannte Hubvorrichtung mit den vier oder mehr Hubstützen führt beim Nivellieren eine Hubbewegung nach oben aus. Das Chassis wird dabei aus der Federung gehoben.

Aus der Praxis sind auch Nivelliereinrichtungen für Straßenfahrzeuge mit vier hydraulischen Hubstützen bekannt.

Die US 2019/0329622 A1 offenbart eine Nivelliereinrichtung entsprechend dem Oberbegriff des Anspruchs 1 sowie ein Verfahren zum Nivellieren entsprechend dem Oberbegriff des Anspruchs 14 und befasst sich mit einer kippfesten Stabilisierung und Abstützung eines abgestellten Fahrzeugs mit heb- und senkbaren Rädern am Untergrund. Das Stabilieren erfolgt durch vier ausfahrbare Hubstützen, wobei die Räder anschließend vom Untergrund abgehoben werden oder Hubstützen und Räder das Fahrzeugchassis ohne Änderung seiner Lage gemeinsam tragen.

Es ist Aufgabe der vorliegenden Erfindung, eine verbesserte Nivelliertechnik aufzuzeigen.

Die Erfindung löst diese Aufgabe mit den Merkmalen in den selbstständigen Ansprüchen.

Die beanspruchte Nivelliertechnik, d.h. die Nivelliereinrichtung, das Nivellierverfahren und ein mit der Nivelliereinrichtung ausgerüstetes Straßenfahrzeug, haben verschiedene Vorteile.

Ein Erfindungsaspekt betrifft die Ausbildung der Nivelliereinrichtung und des Nivellierverfahrens. Bei der beanspruchten Nivelliertechnik umfasst die Hubvorrichtung erfindungsgemäß mehrere Radhubmittel, die jeweils dazu ausgebildet sind, ein Fahrzeugrad individuell relativ zum Chassis zu heben und zu senken. Die Hubvorrichtung kann sich dabei auf den Achsbereich und die Radhubmittel beschränken. Die Radhubmittel werden von der Nivelliersteuerung individuell gesteuert.

Ferner weist die Nivelliereinrichtung zusätzlich mehrere von der Nivelliersteuerung ansteuerbare, arretierbare sowie heb- und senkbare Chassisstützen auf. Das Nivellieren ist erfindungsgemäß von den individuell steuerbaren Radhubmitteln und auch von den Chassisstützen durchführbar.

Die Nivelliereinrichtung kann nach einem weiteren unabhängigen Erfindungsaspekt derart gesteuert sein bzw. das Nivellierverfahren kann derart erfolgen, dass die Hubvorrichtung beim Nivellieren das Chassis absenkt. Dabei kann die ausgerichtete Nivellierposition tiefer liegen als die Ausgangsposition. Das Chassis ist in der ausgerichteten Nivellierposition bevorzugt vom Boden distanziert.

Dies ist mit der beanspruchten Hubvorrichtung mit individuellen Radhubmitteln und auch mit einer konventionellen Hubvorrichtung nach dem eingangs genannten Stand der Technik möglich, die nur Hubstützen am Chassis und keine zum Nivellieren benutzten individuellen Radhubmittel aufweist.

Das Absenken des Chassis beim Nivellieren hat einerseits den Vorteil, dass bei einem Straßenfahrzeug mit einem Aufbau und einer Türe der Einstiegsbereich in der ausgerichteten Nivellierposition eine ergonomisch günstige tiefe Lage hat. Diese ausgerichtete Nivellierposition ist tiefer und günstiger als beim Stand der Technik.

Ferner können bei der beanspruchten Nivelliertechnik Kontaktprobleme der vorbekannten Hubvorrichtung mit dem Boden vermieden oder zumindest signifikant vermindert werden. Bei der vorbekannten Nivelliertechnik und beim Anheben des Chassis ist es möglich, dass je nach Bodenbeschaffenheit die maximale Ausfahrlänge bzw. Absenklänge der Hubstützen überschritten wird, so dass in der Nivellierposition eine oder mehrere Hubstützen keinen Bodenkontakt haben und damit keine sichere Chassis- und Fahrzeugabstützung in der ausgerichteten Nivellierposition bieten können.

Bei der beanspruchten Nivelliertechnik und dem Absenken des Chassis beim Nivelliervorgang kann diese Problematik mit hoher Sicherheit vermieden werden. Die beanspruchte Nivelliertechnik erlaubt eine sichere und an allen Aufstützpunkten bestehende bodenseitige Abstützung des Chassis und des Straßenfahrzeugs.

Das Chassis kann nach dem ersten Erfindungsaspekt im Stand und in der ausgerichteten Nivellierposition von den mehreren Radhubmitteln und von den mehreren arretierten Chassisstützen zuverlässig und stabil an einer Mehrzahl von am Chassis verteilten Punkten, z.B. sechs oder mehr Punkten, abgestützt werden. Das Chassis kann in der ausgerichteten Nivellierposition mit einem günstigen Abstand über dem Untergrund bzw. Boden schwebend angeordnet sein. Der Abstand kann niedriger als beim Stand der Technik sein. Ein Aufliegen des Chassis auf dem Untergrund wird vorzugsweise vermieden.

Der meist zentrale Achsbereich kann in der ausgerichteten Nivellierposition durch die Hubvorrichtung bzw. die Radhubmittel abgestützt werden. Jedem Fahrzeugrad einer einachsigen oder ggf. mehrachsigen Achsanordnung kann ein eigenes Radhubmittel zugeordnet sein. Die Radhubmittel dienen zur Höhenverstellung des Chassis beim Nivellieren und auch zu dessen Abstützung in der besagten Nivellierposition. Die Peripherie kann durch die bevorzugt vom Achsbereich distanzierten Chassisstützen abgestützt werden.

Günstig ist eine Anordnung von zwei, drei oder mehr, z.B. vier Chassisstützen. Diese können im Einbauzustand beidseits und in Längsrichtung verteilt sowie mit Abstand vom Achsbereich am Chassis angeordnet sein. Sie können sich im Aufbaubereich befinden und an dessen Ecken angeordnet sein, so dass die im Aufbaubereich und im Stand wirkende statische und ggf. dynamische Hauptlast zuverlässig und besonders stabil abstützbar ist.

Ferner ist es günstig, wenn die Radhubmittel jeweils dazu ausgebildet sind, zwischen Fahrzeugrad und Chassis angeordnet zu werden und zwischen diesen treibend zu wirken. Dies gilt in funktionaler und ggf. in konstruktiver Hinsicht. Der Kraftfluss und die Verstellbewegung können dabei direkt zwischen dem jeweils beaufschlagten Fahrzeugrad und dem Chassis verlaufen.

Die beanspruchte Nivelliereinrichtung hat den Vorteil, dass die von Radhubmitteln gebildete Hubvorrichtung im Achsbereich wirkt. Die beaufschlagte Achsanordnung und ihre Räder können nicht nur die Hebe- und Senkbewegung des Chassis bewirken. Sie können auch an der Bodenabstützung von Chassis und Fahrzeug in der letztendlich ausgerichteten Nivellierposition teilnehmen. Die Radhubmittel können ebenfalls bedarfsweise in der ausgerichteten Nivellierposition des Chassis arretiert werden, z.B. zur Antriebsentlastung.

Durch die individuellen und jeweils eigenständig steuerbaren Radhubmittel ist es möglich, an den Rädern beider Chassisseiten eigenständige Hub- und Senkbewegungen vorzunehmen. Hierbei sind vor allem die Senkbewegungen beim Nivellieren und bei der Einnahme der bevorzugt tiefen Nivellierposition von Vorteil. Andererseits können die Radhubmittel das Chassis und das Fahrzeug auch wieder in die fahrbereite Position anheben. Die Federung der Achsanordnung kann entsprechend ausgebildet sein, um diese individuellen Hebe- und Senkbewegungen des Fahrzeugrads relativ zum Chassis vorzunehmen.

Für das Nivellieren ist eine Chassisverstellung und Krafteinleitung mittels der Radhubmittel an zentraler Stelle im Achsbereich und nahe am Schwerpunkt des Straßenfahrzeugs besonders günstig. Leichtbau-Chassis sind hier besonders steif. Die bei Leichtbau empfindlichere Peripherie wird kaum belastet und kann durch die z.B. passiven Chassisstützen bei Einnahme der Nivellierposition gegen den Boden abgestützt werden.

Das Eingangs genannte vorteilhafte Absenken des Chassis in die tief liegende ausgerichtete Nivellierposition ist mit der vorgenannten und bevorzugten Ausgegestaltung der Nivelliereinrichtung auf besonders vorteilhafte Weise erreichbar.

Dabei kann das Chassis von der Hubvorrichtung zunächst angehoben und anschließend wieder in die ausgerichtete Nivellierposition abgesenkt werden. Das Nivellieren und Ausrichten des Chassis in einer oder mehreren, insbesondere zwei, Hauptrichtungen kann während des Anhebens des Chassis und/oder während des Absenkens des Chassis erfolgen. Die letztendlich ausgerichtete Nivellierposition liegt dabei ebenfalls tiefer als beim Stand der Technik und hat die vorgenannten Vorteile. Eine entsprechend nachgiebige Ausbildung der Federung der Achsanordnung ist für die Einnahme einer möglichst tiefen besagten Nivellierposition günstig.

Die beanspruchte Nivelliereinrichtung und ihre Komponenten sind eigenständig herstellbar und handelbar. Sie können z.B. einen Bausatz bilden. Die beanspruchte Nivelliereinrichtung kann herstellerseitig bei einem Straßenfahrzeug, insbesondere einem Anhänger, bei der Erstausrüstung eingebaut werden. Die Nivelliereinrichtung kann alternativ an einem vorhandenen Straßenfahrzeug, insbesondere Anhänger, auch nachgerüstet oder umgerüstet werden. Der Einbau kann von einer Fachwerkstatt oder ggf. auch von technisch versierten Laien vorgenommen werden.

Bei der beanspruchten Nivelliereinrichtung können die Radhubmittel in unterschiedlicher Weise ausgebildet und angeordnet sein sowie unterschiedlich wirken. In einer vorteilhaften Ausführung können die Radhubmittel an einem Radschwinghebel der Achsanordnung angreifen. Sie können sich dabei vorteilhafterweise am Chassis direkt oder mittelbar abstützten. Der Angriff eines Radhubmittels ist an einem äußeren Schwinghebelarm oder an einem inneren Schwinghebelarm des Radschwinghebels möglich. Das Radhubmittel dreht den äußeren oder inneren Schwinghebelarm relativ zum Chassis, wobei das Fahrzeugrad relativ zum Chassis gehoben oder gesenkt wird.

Ferner ist es möglich, dass die Radhubmittel Zusatzfunktionen haben. Sie können z.B. einen Bestandteil der Federung der Achsanordnung bilden.

In einer anderen vorteilhaften Ausführungsform können die Radhubmittel vorgesehen und ausgebildet sein, um an einem Achskörper der Achsanordnung anzugreifen. Für eine individuelle Beaufschlagung der beidseitig am Chassis angeordneten Räder ist es günstig, wenn die Achsanordnung Halbachsen oder Stummelachsen mit jeweils einem einzelnen Fahrzeugrad aufweist. Das Radhubmittel kann dabei an einem solchen Achskörper einer Halbachse angreifen. Das Radhubmittel kann in diesen genannten Fällen den Achskörper um seine Achse drehen und/oder in einem Bogen relativ zum Chassis zu schwenken. In beiden Fällen wird die besagte relative Hebe- und Senkbewegungen des mitgenommenen Fahrzeugrads gegenüber dem Chassis ausgeführt. Der Achskörper kann in der Fahrstellung arretiert werden. Eine Arretierung ist auch in einer oder mehreren Zwischenstellungen möglich.

Die Radhubmittel können jeweils ein steuerbares Antriebsmittel aufweisen. Dieses kann mit der Nivelliersteuerung in geeigneter Weise steuertechnisch verbunden werden oder sein. Das steuerbare Antriebsmittel kann in unterschiedlicher Weise ausgebildet sein. Günstig ist eine Ausbildung als ein Zylinder, insbesondere als ein hydraulischer Zylinder. Alternativ ist eine Ausgestaltung des Antriebsmittels als elektromechanischer Spindeltrieb, als Luftfederelement oder dgl. möglich.

Die mehreren Chassisstützen können von der Nivelliersteuerung angesteuert werden. Sie können arretierbar sowie heb- und senkbar ausgebildet sein.

Hierfür gibt es verschiedene konstruktive Ausgestaltungsmöglichkeiten.

Erfindungsgemäß sind die Chassisstützen als passive Stützen ausgebildet. Diese werden beim Nivellieren derart von der Nivelliersteuerung angesteuert, dass sie vor oder bei dem Nivellieren auf den Boden abgesenkt werden und Bodenkontakt haben. Wenn beim Nivellieren die Hubvorrichtung bzw. die Radhubmittel das Chassis gegenüber den am Boden aufstehenden Fahrzeugrädern bei der besagten Relativbewegung absenken, werden die Chassisstützen kraftneutral geschaltet.

Kraftneutral bedeutet, dass sie der Absenkbewegung oder Hebebewegung des Chassis keinen signifikanten Widerstand entgegen setzen. Sie werden unter Beibehaltung Ihres Bodenkontakts eingefahren bzw. angehoben. In der ausgerichteten Nivellierposition und ggf. auch in einer Zwischenstellung werden die Chassisstützen von der Nivelliersteuerung arretiert.

Durch die Arretierung entfalten sie dann eine Stützfunktion für das Chassis und den Fahrzeugaufbau. Die Chassisstützen können auch als aktive Stützen ausgebildet sein. Sie können beim Nivellieren des Chassis beteiligt sein und können dieses stellenweise heben und/oder senken. Sie können z.B. bei einem Nivellierschritt das Chassis um einen z.B. schwenkbaren Achskörper oder um die Radaufstandspunkte am Untergrund drehen.

Die Chassisstützen können jeweils ein heb- und senkbares Stützmittel und ein steuerbares Antriebsmittel aufweisen. Ein Stützmittel kann z.B. als Schwenkfuß ausgebildet sein, der von dem Antriebsmittel durch eine Schwenkbewegung oder eine aufrechte Linearbewegung gehoben und gesenkt wird. Das Antriebsmittel kann als elektromotorische Treibeinrichtung, als Zylinder, bevorzugt hydraulischer Zylinder, oder in anderer Weise ausgebildet sein. Das Antriebsmittel kann in einer anderen Ausführung auch das heb- und senkbare Stützmittel bilden. Hierbei kann z.B. das Antriebsmittel als linear teleskopierbarer Zylinder, elektromotorisches Spindeltrieb oder dgl. ausgebildet sein. Am freien Ende kann die Chassisstütze einen bevorzugt gelenkig gelagerten Stützfuß für den Bodenkontakt aufweisen.

Die Chassisstützen können in einer Ausführungsform der Nivelliertechnik im Wesentlichen nur zur Abstützung des Chassis und des Straßenfahrzeugs in der ausgerichteten Nivellierposition oder ggf. auch in einer Zwischenstellung benutzt werden. Bei dieser Ausführungsform müssen die Chassisstützen keine Hubkraft für das Chassis aufbringen. Das Absenken der Chassisstützen kann durch Eigengewicht erfolgen. Das Antriebsmittel wird bei der bevorzugten Ausführungsform im Wesentlichen zum Anheben bzw. Einfahren der Chassisstütze benutzt und kann entsprechend leistungsschwach ausgebildet sein.

Es ist aber auch eine leistungsstärkere Ausbildung der Chassisstützen möglich, die dann auch Hubkräfte entwickeln können und bedarfsweise die Radhubmittel unterstützen können. Die leistungsstärkeren bzw. aktiven Chassisstützen können beim Nivelliervorgang, insbesondere bei einem Nivellierschritt beteiligt sein.

Die Chassisstützen weisen jeweils ein steuerbares Arretiermittel auf. Dieses kann in unterschiedlicher Weise ausgebildet und angeordnet sein. Z.B. ist eine Anordnung am Stützmittel und/oder am steuerbaren Antriebsmittel möglich. Bei einer hydraulischen Chassisstütze kann ein Arretiermittel z.B. als Sperrventil oder dgl. im Hydraulikkreis ausgebildet sein. Bei einem Gewindetrieb kann eine Selbsthemmung das Arretiermittel bilden.

Vorteilhafterweise können die mehreren Radhubmittel und die mehreren Chassisstützen eine gemeinsame Betriebsmittelversorgung aufweisen. Dies kann z.B. eine gemeinsame Hydraulikversorgung, insbesondere ein gemeinsames Hydraulikaggregat, z.B. mit Pumpe, Hydraulikreservoir, Leitungen und Ventilsteuerung sein. Alternativ können die Radhubmittel und/oder die Chassisstützen eigene und getrennte Betriebsmittelversorgungen haben. Bei einer elektromechanischen Ausbildung der Antriebsmittel von Radhubmitteln und Chassisstützen kann die Nivelliereinrichtung eine gemeinsame elektrische Leistungsendstufe aufweisen. Alternativ ist jeweils eine dezentrale Anordnung möglich.

Die Nivelliereinrichtung kann ein mobiles Stützelement umfassen, das für eine von unten stützende Anordnung am Chassis, insbesondere am vorderen Chassisende, beim Nivellieren vorgesehen und ausgebildet ist. Ein solches mobiles und bevorzugt frontseitiges Stützelement ist für eine Nivellierung in einer ersten Hauptrichtung, insbesondere in Längsrichtung des Chassis, günstig. Hierbei kann das Chassis frontseitig und bevorzugt im Deichselbereich bei der Senkbewegung der Radhubmittel abgestützt werden. Das mobile Stützelement kann nach erfolgter Nivellierung und für den Fahrbetrieb entfernt werden. Es kann z.B. als Stützbock ausgeführt sein. Alternativ kann ein vorhandenes und in der Höhe verstellbares Stützrad des Straßenfahrzeugs als mobiles Stützelement benutzt werden.

Bei einer anderen Ausführung der Nivelliertechnik kann das mobile Stützelement einen geringeren Funktionsumfang haben und kann vor allem zum Einstellen einer in Längsrichtung abwärts oder aufwärts geneigten Ausgangsposition des Chassis dienen. Eine Stützfunktion beim Nivellierung in Längsrichtung des Chassis ist dabei nicht erforderlich.

Die Nivelliereinrichtung kann je nach konstruktiver Ausbildung und gewünschtem Nivellierverfahren entsprechend gesteuert werden. Hierbei erfolgt erfindungsgemäß eine Ausrichtung in mehreren, z.B. zwei, Hauptrichtungen beim Nivellieren.

Dies kann die Längsrichtung und Querrichtung des Chassis bzw. Straßenfahrzeugs sein. Das Nivellieren kann auf eine gewünschte räumliche Winkellage des Chassis erfolgen. Der genannte Raumwinkel bezieht sich auf die Horizontale im Raum. Die gewünschte Winkellage betrifft üblicherweise eine exakt horizontale Ausrichtung der Hauptebene des Chassis und den Raumwinkel 0°. Alternativ sind andere Winkel, z.B. eine bewusste leichte Schrägstellung in einer oder mehreren Hauptrichtungen und ein von 0° abweichender Raumwinkel möglich.

Nach dem einen Erfindungsaspekt wird das Chassis beim Nivelliervorgang mittels der Hubvorrichtung abgesenkt. Dies kann in der vorgenannten Weise durch Absenken aus einer Ausgangsposition erfolgen. Hierbei kann das Chassis ausschließlich Senkbewegungen ausführten.

Alternativ besteht die Möglichkeit, dass beim Nivellieren das Chassis mittels der Hubvorrichtung zunächst angehoben, in einer oder mehreren Hauptachsen ausgerichtet und bei oder nach dem Nivellieren wieder abgesenkt wird. Dies ist auch mit der genannten konventionellen Nivelliervorrichtung möglich.

Das Nivellieren und Ausrichten des Chassis in der gewünschten räumlichen Winkellage kann durch eine Hebe- und/oder Senkbewegung der individuell betätigbaren Radhubmittel und/oder durch eine Hebe- und/oder Senkbewegung der individuell betätigbaren Chassisstützen erfolgen. Das Nivellieren läuft in mehreren, z.B. zwei, Schritten ab.

Die individuell betätigbaren Radhubmittel sind an mindestens einem Nivellierschritt beteiligt.

Die Nivelliereinrichtung wird erfindungsgemäß beim Nivellieren derart gesteuert, dass das Chassis mittels der Hubvorrichtung und der Nivelliersensorik ausgehend von einer bevorzugt frontseitig abgestützen Ausgangsposition bis in eine Zwischenlage absenkt und dabei mit einem gewünschten Raumwinkel in einer ersten Hauptrichtung, insbesondere in Längsrichtung des Chassis, ausgerichtet wird, wobei anschließend das Chassis bis in eine Nivellierposition bewegt und dabei mit einem gewünschten Raumwinkel auch in einer zweiten Hauptrichtung, insbesondere in Querrichtung, ausgerichtet wird.

Für die steuertechnische Umsetzung gibt es verschiedene Möglichkeiten. In einer ersten Ausführung senkt die Hubvorrichtung das Chassis ausgehend von der besagten Ausgangsposition bei mit Bodenkontakt abgesenkten und kraftneutral geschalteten Chassisstützen bis in die Zwischenlage ab und richtet das Chassis mit einem gewünschten Raumwinkel in der ersten Hauptrichtung, insbesondere in Längsrichtung, aus. Anschließend kann durch Betätigen des oder der Radhubmittel an einer Chassisseite und Arretierung der Chassisstütze(n) an der anderen Chassisseite das Chassis bis in die Nivellierposition bewegt werden, in der das Chassis mit einem gewünschten Raumwinkel auch in einer zweiten Hauptrichtung, insbesondere in Querrichtung, ausgerichtet ist. Beide Nivellierschritte werden dabei durch die Radhubmittel ausgeführt.

In einer Ausgestaltung kann die Nivelliereinrichtung beim Nivellieren derart gesteuert sein, dass bei der Bewegung des Chassis aus der Zwischenlage in die Nivellierposition das oder die Radhubmittel an der höheren Chassisseite betätigt und die Chassisstütze(n) an der tieferen Chassisseite arretiert werden, wobei das Chassis einseitig abgesenkt wird. Dies ist günstig, um eine tief liegende Nivellierposition zu erreichen. Ansonsten kann die Kinematik auch umgekehrt sein und die tiefere Chassisseite angehoben werden.

In einer anderen steuertechnischen Ausführung senkt die Hubvorrichtung das Chassis ausgehend von der besagten Ausgangsposition bei eingefahrenen Chassisstützen bis in die Zwischenlage ab und richtet das Chassis mit einem gewünschten Raumwinkel in der ersten Hauptrichtung, z.B. in der Querrichtung des Chassis, aus, wobei die Chassisstützen anschließend auf Kontakt mit dem Untergrund ausgefahren werden und dann das Chassis in eine Nivellierposition bewegen in der das Chassis im gewünschten Raumwinkel auch in einer zweiten Hauptrichtung, z.B. in Längsrichtung, ausgerichtet wird. Dies erfolgt durch durch Betätigen des oder der Chassisstützen. Die Nivellierschritte werden dabei einerseits durch die Radhubmittel und andererseits durch die Hubstützen ausgeführt. Diese Nivelliertechnik ist besonders für eine Hubvorrichtung einem Angriff der Radhubmittel an einem schwenkbaren Achskörpern geeignet.

In den Unteransprüchen sind weitere vorteilhafte Ausgestaltungen der Nivelliereinrichtung, des Nivellierverfahrens und des Straßenfahrzeugs angegeben.

Die beanspruchte Nivelliertechnik kann weitere nachfolgend genannte vorteilhafte Merkmale haben, die einzeln oder in Kombination eingesetzt werden können.

Die Radhubmittel der Hubvorrichtung können jeweils dazu ausgebildet sein, an einem Radschwinghebel der Achsanordnung anzugreifen. Die Radhubmittel können insbesondere jeweils dazu ausgebildet sein, an einem äußeren und entlang der Längsachse ausgerichteten Schwinghebelarm des Radschwinghebels anzugreifen. Andererseits können die Radhubmittel jeweils dazu ausgebildet sein, an einem inneren und quer zur Längsachse ausgerichteten Schwinghebelarm des Radschwinghebels anzugreifen.

Die Chassisstützen können jeweils für einen Anbau am Chassis in einem Aufbaubereich des Straßenfahrzeugs vorgesehen und ausgebildet sein.

Die Chassisstützen können jeweils ein heb- und senkbares Stützmittel und ein steuerbares Antriebsmittel aufweisen. Das Antriebsmittel kann ein hydraulischer Zylinder sein. die Chassisstützen können jeweils ein heb- und senkbares Stützmittel und ein steuerbares Antriebsmittel, insbesondere einen bevorzugt hydraulischen Zylinder, aufweisen.

Die Chassisstützen können jeweils einen heb- und senkbaren Stützfuß aufweisen.

Die Nivelliereinrichtung kann zwei, drei, vier oder mehr Chassisstützen umfassen.

Die Radhubmittel und die Chassisstützen können eine gemeinsame Betriebsmittelversorgung, insbesondere eine gemeinsame Hydraulikversorgung, aufweisen.

Beim beanspruchten Straßenfahrzeug können die Radhubmittel jeweils zwischen Fahrzeugrad und Chassis angeordnet sind und zwischen diesen treibend wirken. Die Chassisstützen können am Chassis beidseits und in Längsrichtung verteilt, bevorzugt an einem Aufbaubereich, angeordnet sein.

Die Achsanordnung des Straßenfahrzeugs kann eine oder mehrere Achsen aufweisen. Dies können bevorzugt Radlenkerachsen mit ein- oder beidseitigen individuellen Radschwinghebeln sein.

Die Achsanordnung kann eine Federung aufweisen. Dies kann eine achsintegrierte Federung und/oder eine Luftfederung sein.

Die Fahrzeugräder können eine Einzelradaufhängung haben.

Das Straßenfahrzeug kann als Anhänger mit einem Chassis mit Längsträgern und einer frontseitigen starren Deichsel, insbesondere einer V-Deichsel, ausgebildet sein.

An der Frontseite des Chassis, insbesondere im Deichselbereich, kann ein heb- und senkbares Stützrad angeordnet sein. Das Stützrad kann ein Stützelement beim Nivellieren bilden.

Beim beanspruchten Nivellierverfahren wird erfindungsgemäß beim Nivellieren das Chassis mittels der Hubvorrichtung und der Nivelliersensorik ausgehend von einer bevorzugt frontseitig abgestützen Ausgangsposition bis in eine Zwischenlage absenkt und dabei mit einem gewünschten Raumwinkel in einer ersten Hauptrichtung ausgerichtet, wobei anschließend das Chassis bis in die Nivellierposition bewegt und dabei mit einem gewünschten Raumwinkel auch in einer zweiten Hauptrichtung, ausgerichtet wird. Die ersten Hauptrichtung kann die Längsrichtung des Chassis und die zweite Hauptrichtung die Querrichtung des Chassis sein. Die Richtungszuordnung kann auch umgekehrt sein.

Bei der Bewegung des Chassis aus der Zwischenlage in die Nivellierposition kann die Hubvorrichtung nur an einer Chassisseite betätigt werden und die Chassisstütze(n) an der anderen Chassisseite können arretiert werden, wobei das Chassis einseitig bewegt wird.

Bei der Bewegung des Chassis aus der Zwischenlage in die Nivellierposition kann die Hubvorrichtung z.B. nur an der höheren Chassisseite betätigt werden und die Chassisstütze(n) an der tieferen Chassisseite können arretiert werden, wobei das Chassis einseitig abgesenkt wird.

Beim beanspruchten Nivellierverfahren kann die Hubvorrichtung mehrere Radhubmittel aufweisen, die an beiden Chassisseiten jeweils ein Fahrzeugrad individuell relativ zum Chassis heben und senken. Die Radhubmittel können bevorzugt zwischen Fahrzeugrad und Chassis angeordnet sein und zwischen diesen treibend wirken.

Beim beanspruchten Nivellierverfahren kann beim Absenken des Chassis mittels der Hubvorrichtung zumindest eine Chassisstütze bis auf Bodenkontakt abgesenkt und kraftneutral geschaltet werden.

Beim beanspruchten Nivellierverfahren kann das Chassis in der ausgerichteten Nivellierposition mit Abstand über dem Boden angeordnet werden.

Die Erfindung ist in den Zeichnungen beispielhaft und schematisch dargestellt. Im Einzelnen zeigen:
- Figur 1:: einen Anhänger mit einem Chassis und einem Aufbau sowie einer Nivelliereinrichtung in einer schematischen Seitenansicht,
- Figur 2:: eine Draufsicht auf die Anordnung von Figur 1,
- Figur 3:: eine hydraulische Chassisstütze in perspektivischer Ansicht
- Figur 4:: eine Prinzipdarstellung der Nivelliereinrichtung an einem schematisierten Chassis in Seitenansicht,
- Figur 5:: eine Frontansicht der Anordnung gemäß Pfeil V von Figur 4,
- Figur 6:: ein hydraulisches Radhubmittel an einem Radlenker in Seitenansicht,
- Figur 7 und 8:: die Anordnung von Figur 6 mit einem Fahrzeugrad in verschiedenen Hubstellungen,
- Figur 9 und 10:: ein Fahrzeugchassis beim Nivellieren mit einer Ausgangsposition, einer ausgerichteten Nivellierposition und einer Zwischenstellung in Seitenansicht und Frontansicht und
- Figur 11 und 12:: Varianten der Nivelliereinrichtung mit einer Luftfederung und mit einer Achsanordnung mit Halbachsen.

Die Erfindung betrifft eine Nivelliereinrichtung (2) und ein Nivellierverfahren für ein Straßenfahrzeug (1), insbesondere einen Anhänger, sowie ein solches mit einer Nivelliereinrichtung (2) ausgerüstetes Straßenfahrzeug (1).

Das Straßenfahrzeug (1) ist in den gezeigten Ausführungsbeispielen als Anhänger ausgebildet. Alternativ ist eine andere Ausgestaltung, z.B. als Kraftfahrzeug, insbesondere als Wohnmobil, Leichtlastwagen oder dgl. möglich.

Das Straßenfahrzeug (1) weist ein Chassis (3) mit einer gefederten Achsanordnung (4) sowie mit beidseitigen Fahrzeugrädern (6,7) auf. Das Straßenfahrzeug (1) bzw. das Chassis (3) weist eine Längsachse (40) auf.

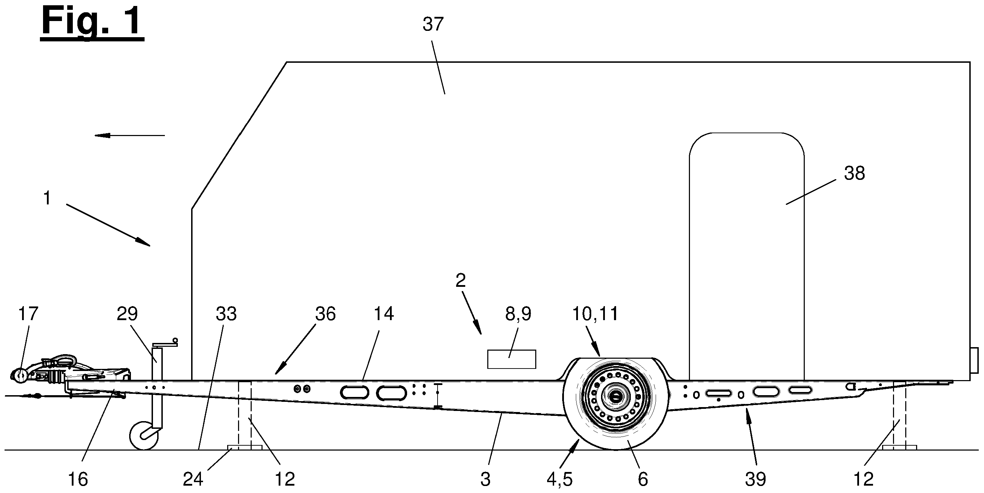

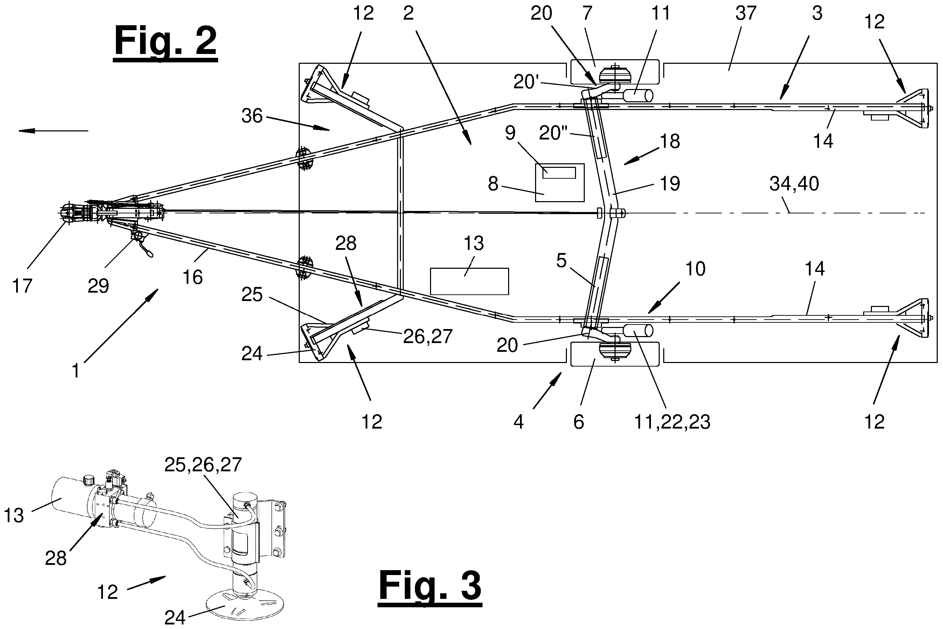

Das Chassis (3) kann z.B. zwei oder mehr parallele Längsträger (14) aufweisen, die als abgekantete Metallprofile, z.B. als dünnwandige Z- oder L-Profile, als Sandwichplatten oder in anderer geeigneter Weise ausgebildet sind. Die Achsanordnung (4) kann an den Längsträgern (14) mittels einer Achsaufnahme (15), z.B. einem Achsbock, angeordnet sein. Im Falle eines Anhängers (1) kann das Chassis (3) an dem in Fahrtrichtung vorn liegenden Frontbereich eine starre Deichsel (16) mit einer Anhängerkupplung (17) aufweisen. Die Deichsel (16) ist z.B. als V-Deichsel ausgebildet. Alternativ ist eine andere Ausführung, z.B. als Rohrdeichsel, möglich. Die Fahrtrichtung ist in Figur 1 und 2 durch einen Pfeil markiert.

Die Achsanordnung (4) weist eine oder mehrere Achsen (18) und eine Federung (5) auf. In den Ausführungsbeispielen ist ein einachsiger Anhänger (1) dargestellt. Alternativ sind Anhänger (1) mit Tandemachsen oder Trippelachsen möglich. Die ein oder mehreren Achsen (18) sind vorzugsweise als Radlenkerachsen ausgebildet. Sie weisen einen Achskörper (19) mit einem schwenkbar gelagerten Radschwinghebel (20) an einem oder beiden Enden des Achskörpers (19) auf.

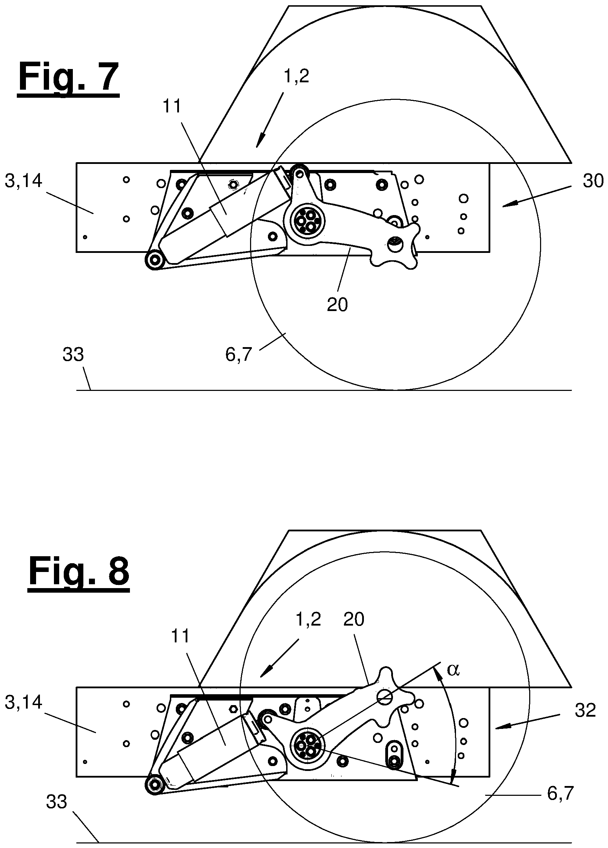

In den Ausführungsformen von Figur 1 bis 11 erstreckt sich ein einzelner Achskörper (19) über die gesamte Fahrzeugbreite und weist an beiden Chassisseiten jeweils ein Fahrzeugrad (6,7) und einen im oder am Achskörper (19) schwenkbar gelagerten Radschwinghebel (20) auf. Die Fahrzeugräder (6,7) haben eine Einzelradaufhängung.

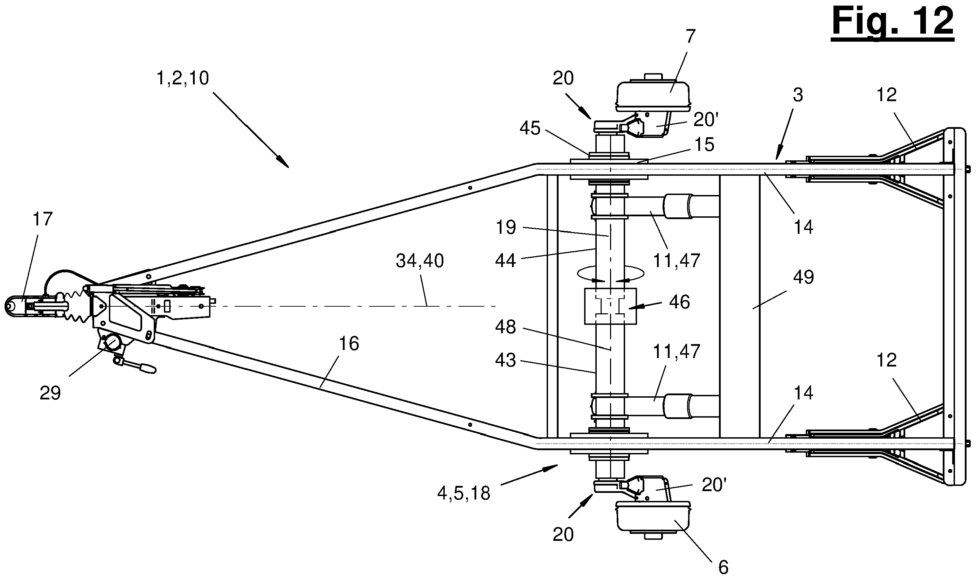

In einer anderen und in Figur 12 dargestellten Ausführungsform ist eine Ausbildung der Achse (18) als Halbachse (43,44) oder Stummelachse möglich, deren Achskörper (19) nur über einen Teilbereich der Chassisbreite reicht. Die Halbachse (43,44) hat jeweils nur an einem stirnseitigen Ende einen schwenkbar gelagerten Radschwinghebel (20) mit einem daran befestigten Fahrzeugrad (6,7). Auch in dieser Variante haben die Fahrzeugräder (6,7) eine Einzelradaufhängung.

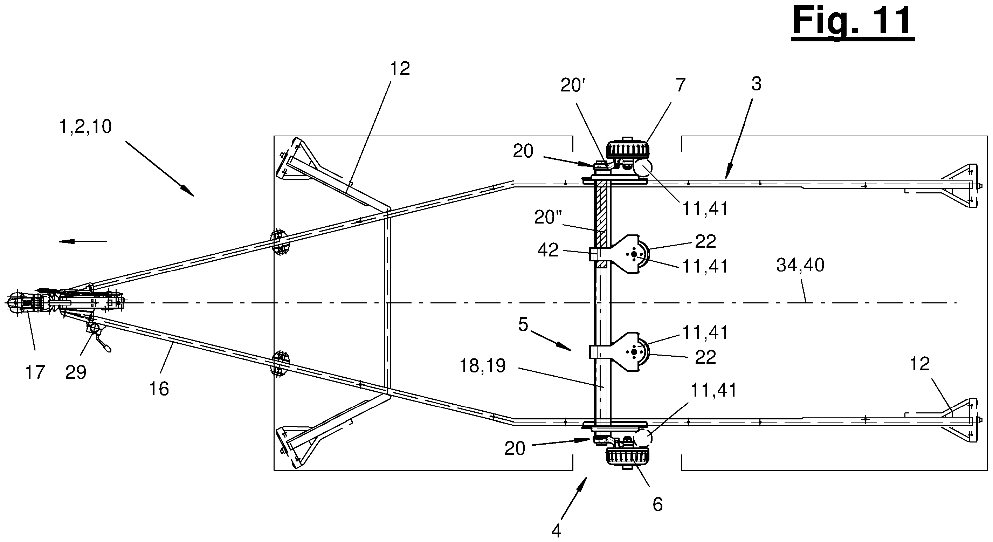

Der Radschwinghebel (20) weist in den gezeigten Varianten jeweils einen äußeren Schwinghebelarm (20') und einen inneren Schwinghebelarm (20") auf. Der äußere Schwinghebelarm (20') erstreckt sich hauptsächlich entlang der Längsachse (40). Er kann dabei leicht schräg nach außen geneigt sein. Der innere Schwinghebelarm (20") ist hauptsächlich quer zur Längsachse (40) ausgerichtet. Bei einer in Figur 11 gezeigten Längslenkerachse mit geradem Achskörper (19) ist der innere Schwinghebelarm (20") rechtwinklig zur Längsachse (40) ausgerichtet. Bei einer Schräglenkerachse gemäß Figur 2 mit einem pfeilförmig abgewinkelten Achskörper (19) ist der innere Schwinghebelarm (20") schräg zur Längsachse (40) ausgerichtet. In einer anderen und nicht dargestellten Ausführungsform kann der Radschwinghebel (20) nur einen äußeren Schwinghebelarm (20') aufweisen.

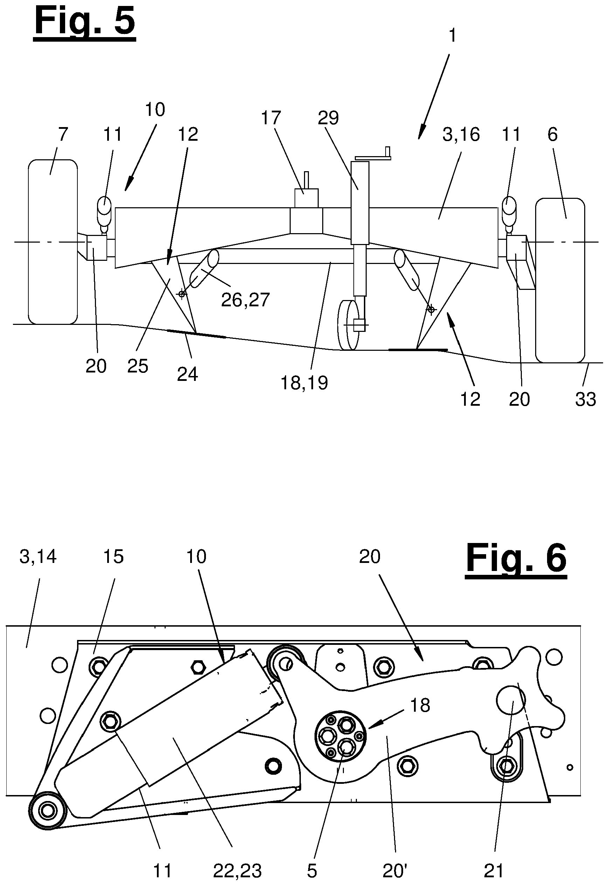

Der äußere Schwinghebelarm (20') ist außenseitig zwischen Chassis (3) und Fahrzeugrad (6,7) angeordnet. Er ist außerhalb des Achskörpers (19) angeordnet. Der äußere Schwinghebelarm (20') trägt das Fahrzeugrad (6,7). Er kann an geeigneter Stelle, z.B. am freien Ende, eine in Figur 6 dargestellte Radaufnahme (21) für die Befestigung eines Fahrzeugrads (6,7) bzw. seiner Nabe aufweisen.

Der äußere Schwinghebelarm (20') kann am Achskörper (19) gelagert sein. Dies kann z.B. durch ein Drehlager am Ende des Achskörpers (19) erfolgen. In den gezeigten Varianten erfolgt die Lagerung am Achskörper (19) durch den inneren Schwinghebelarm (20"), der in einem hohlen Achskörper (19) angeordnet und mit dem äußeren Schwinghebelarm (20') drehfest verbunden ist.

Alternativ sind andere Achsausbildungen mit einer Einzelradaufhängung möglich. Für die Erfindung ist es vorteilhaft, wenn die an beiden Chassisseiten, d.h. Längsseiten, angeordneten Fahrzeugräder (6,7) unabhängig voneinander in ihrer relativen Höhenlage bzgl. des Chassis (3) verstellt werden können. Die Achsausbildung und Radaufhängung können hieran entsprechend unterschiedlich angepasst sein.

Die Achsanordnung (4), insbesondere die jeweilige Achse (18), weist eine Federung (5) auf. Dies kann eine in Figur 2 angedeutete Achsfederung sein, die z.B. als Drehstabfederung oder Gummifederung ausgebildet und in den bevorzugt hohlen Achskörper (19) integriert ist. Der Radschwinghebel (20) kann dabei mit dem inneren Schwinghebelarm (20") im hohlen Achskörper (19) drehbar gelagert und mit ein oder mehreren Drehstäben bzw. Torsionsstäben oder mit ein oder mehreren Gummischnüren verbunden sein. Bei einer Drehstabfederung kann der innere Schwinghebelarm (20") ggf. entfallen, wobei der äußere Schwinghebelarm (20') ggf. außen am Achskörper (19) mit einem Drehlager gelagert und mit einer Aufnahme für die ein oder mehreren Drehstäbe bzw. Torsionsstäbe ausgestattet ist.

In einer anderen und in Figur 11 dargestellten Ausführungsform kann die Federung (5) alternativ oder zusätzlich eine Luftfederung aufweisen. Hierbei kann z.B. ein gestrichelt angedeutetes Luftfederelement (41) am freien Ende des Radschwinghebels (20) angeordnet und gegen das Chassis (3) abgestützt sein. Eine Luftfederung kann gemäß einer anderen und in Figur 11 ebenfalls gezeigten Ausführung auch am Achskörper (19) angeordnet sein und mit jeweils einem schraffiert angedeuteten inneren Schwingebelarm (20") eines Radschwinghebels (20) verbunden sein.

Die Nivelliereinrichtung (2) ist am Straßenfahrzeug (1), vorzugsweise am Chassis (3) in geeigneter Weise angeordnet. Figur 2 verdeutlicht in der Draufsicht die Komponenten der Nivelliereinrichtung (2) und deren beispielhafte Anordnung.

In Figur 1 bis 10 und in den Figuren 11 und 12 sind verschiedene Varianten der Nivelliereinrichtung (2) dargestellt.

Die Nivelliereinrichtung (2) weist in den verschiedenen Varianten jeweils eine Hubvorrichtung (10) für eine Höhenbewegung des Chassis (3) beim Nivellieren auf. Sie weist ferner eine Nivelliersteuerung (8) und eine Nivelliersensorik (9) und mehrere Chassisstützen (12) auf. Die Hubvorrichtung (10) umfasst mehrere Radhubmittel (11), die jeweils einem Fahrzeugrad (6,7) zugeordnet sind und dieses individuell relativ zum Chassis (3) heben und senken können.

Die Radhubmittel (11) sind in Figur 1 bis 11 jeweils zwischen Fahrzeugrad (6,7) und Chassis (3) angeordnet und wirken treibend zwischen diesen. Bei den Ausführungsbeispielen von Figur 1 bis 10 und 11 mit der Radlenkerachse greifen die Radhubmittel (11) am äußeren Schwinghebelarm (20') des Radschwinghebels (20) an und drehen diesen relativ zum Achskörper (19) und zum Chassis (3). Eine z.B. in Figur 5 und 6 verdeutlichte Drehbewegung des Radschwinghebels (20) bzw. äußeren Schwinghebelarms (20') bewirkt die besagte Relativbewegung. Das Fahrzeugrad (6,7) wird individuell relativ zum Chassis (3) gehoben bzw. das Chassis (3) relativ zu dem am Boden (33) stehenden Fahrzeugrad (6,7) abgesenkt.

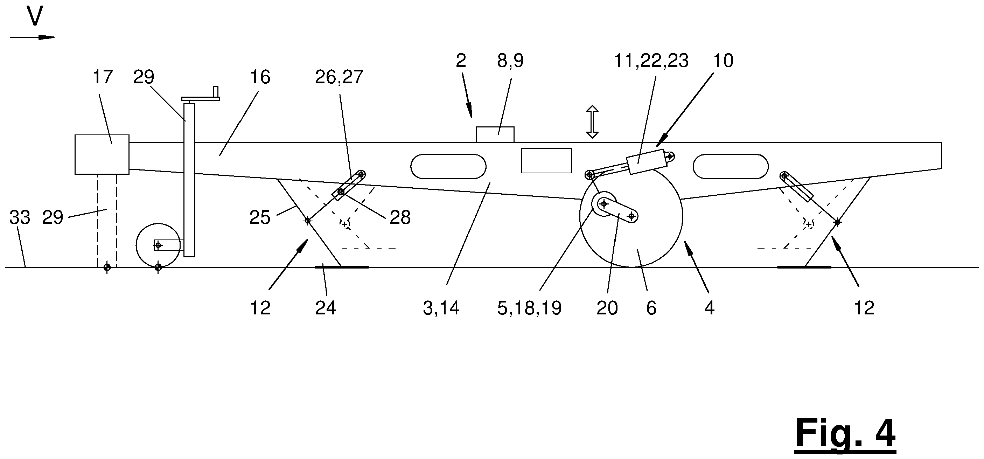

Die Radhubmittel (11) weisen jeweils ein steuerbares Antriebsmittel (22) auf. Dieses ist in den gezeigten Ausführungsbeispielen von Figur 1 bis 10 als hydraulischer Zylinder (23) ausgebildet. Figur 4 bis 6 verdeutlichen diese Ausbildung und Anordnung. Der Zylinder (23) ist am einen Ende mittels eines Beschlags am Chassis (3) oder an der Achsaufnahme (15) angeordnet und ist am anderen Ende gelenkig mit dem Radschwinghebel (20) verbunden. Eine Einfahr- und Ausfahrbewegung des Zylinders (23) dreht den Radschwinghebel (20) in der vorbeschriebenen Weise.

Figur 11 zeigt eine Variante, bei der alternativ oder ggf. zusätzlich zum Zylinder (23) ein Luftfederelement (41) vorhanden sein kann. Das Luftfederelement (41) kann ein Radhubmittel (11) bilden. Das Antriebsmittel (23) kann z.B. von einem steuerbaren Luftfederbalg und von einer nicht dargestellten Druckluftquelle gebildet werden.

Das gestrichelt angedeutete Luftfederelement (41) kann z.B. am freien Ende des Radschwinghebels (20) bzw. äußeren Schwinghebelarms (20') angreifen und am Chassis (3) direkt oder mittelbar abgestützt sein. Das Luftfederelement (41) kann außenseitig am Chassis (3) zwischen Längsträger (14) und Fahrzeugrad (6,7) angeordnet sein.

In einer anderen Ausführung, die in Figur 11 ebenfalls und mit durchgezogenen Strichen dargestellt ist, kann das z.B. doppelt angeordnete Luftfederelement (41) zwischen den Längsträgern (14) innerhalb des Chassis (3) angeordnet sein und mit jeweils einem inneren Schwinghebelarm (20") des Radschwinghebels (20) über einen Beschlag (42) verbunden sein. Die Abstützung gegenüber dem Chassis (3) kann mittelbar über den Aufbau (37) erfolgen. Die Luftfederelemente (41) können den jeweils zugeordneten inneren Schwinghebelarm (20") und dadurch den Radschwinghebel (20) individuell drehen und das Fahrzeugrad (6,7) relativ zum Chassis (3) heben und senken.

In weiterer Abwandlung können statt der zwischen den Längsträgern (14) innerhalb des Chassis (3) angeordneten Luftfederelemente (41) andere Radhubmittel (11) eingesetzt werden, die am inneren Schwinghebelarm (20") angreifen und diesen drehen. Solche Radhubmittel (11) können z.B. als Zylinder, Spindeltriebe oder dgl. ausgebildet sein.

Bei der einachsigen oder mehrachsigen Achsanordnung (4) sind bevorzugt an jedem Fahrzeugrad (6,7) und an beiden Chassisseiten bzw. Längsseiten individuelle Radhubmittel (11) angeordnet. Die Radhubmittel (11) sind mit der Nivelliersteuerung (8) verbunden und werden von dieser individuell über eine Steuerleitung angesteuert. Insbesondere können die an verschiedenen Chassisseiten angeordneten Radhubmittel (11) unabhängig voneinander angesteuert und betätigt werden.

Die Nivelliersteuerung (8) ist mit der Nivelliersensorik (9) verbunden, wobei diese auch in die Steuerung und auf deren Steuerplatine integriert sein kann. Die Nivelliersensorik (9) nimmt über geeignete Sensoren die Lage und Ausrichtung bzw. die räumliche Winkellage des Chassis (3) auf. Dies können z.B. Neigungssensoren, Wegmesser, Abstandssensoren, Beschleunigungsaufnehmer oder dergleichen sein. Hierbei können z.B. Neigungssensoren kreuzweise angeordnet und in einer Längsrichtung oder Längsache (40) sowie in einer hierzu senkrechten Querrichtung des Chassis (3) ausgerichtet sein. Die Nivelliersteuerung (8) ist programmierbar. Sie weist einen oder mehrere Prozessoren nebst I/O-Schnittstellen und Datenspeichern auf.

Die Nivelliereinrichtung (2) weist in den gezeigten Ausführungsbeispielen (4) Chassisstützen (12) auf, die in Einbaustellung am Chassis (3) an den Ecken des Aufbaubereichs (36) angeordnet sind. Dies ist der Chassisbereich unterhalb des Aufbaus (37). Die Chassisstützen (12) können am Chassis (3), insbesondere an dessen Längsträgern (14) und/oder an der Unterseite des Aufbaus (37) angeordnet sein.

Die Chassisstützen (12) sind mit der Nivelliersteuerung (8) verbunden und werden von dieser angesteuert. Die Chassisstützen (12) sind heb- und senkbar bzw. einfahrbar und ausfahrbar und können in einer gewünschten Hubstellung oder Verfahrstellung durch ein Arretiermittel (28) arretiert werden. Das Arretiermittel (28) kann steuerbar sein und kann ebenfalls von der Nivelliersteuerung (8) angesteuert werden.

Die Chassisstützen (12) weisen jeweils ein heb- und senkbares Stützmittel (25) und ein steuerbares Antriebsmittel (26) sowie das ggf. steuerbare Arretiermittel (28) auf. Für die konstruktive Ausgestaltung der Chassisstützen gibt es verschiedene Möglichkeiten.

Figur 2 zeigt eine Ausbildung als mechanische Chassistützen, bei denen das Stützmittel (25) von einem Schwenkarm gebildet wird, der um eine horizontale und chassisfeste Achse dreht, wobei er am freien Ende einen gelenkig gelagerten Stützfuß (24) aufweist. Das Antriebsmittel (26) kann in unterschiedlicher Weise ausgebildet sein. Es kann z.B. von einem pneumatischen oder hydraulischen Zylinder (27) gebildet werden. Alternativ ist ein elektromechanischer Antrieb, z.B. ein Spindeltrieb oder eine andere Antriebstechnik möglich. Bei einem Zylinder kann das Arretierelement (28) in den Fluidkreislauf integriert sein und von der Nivelliersteuerung (8) geschaltet werden. Bei einer anderen Ausführung mit einem Schraubgewinde kann eine Selbsthemmung des Gewindes das Arretierelement (28) bilden. Das Arretierelement (28) verhindert, dass die Chassisstütze (12) in ihrer Ausfahr- oder Senkstellung durch von außen wirkende Belastung in unerwünschter Weise einfährt oder anhebt. Ein Absenken oder Ausfahren der Chassisstütze (12) kann durch Eigengewicht erfolgen. Eine gewollte Einfahrbewegung kann durch das Antriebsmittel (26) bewirkt werden.

Figur 3 zeigt eine Variante der Chassisstütze (12), die hier als teleskopierbarer hydraulischer Zylinder (27) ausgebildet ist. Das teleskopierbare Zylindergehäuse bildet hierbei das Stützmittel (25). Das Arretierelement (28) ist z.B. als schaltbares Ventil in den Hydraulikkreis integriert.

Wie Figur 2 verdeutlicht, können die Radhubmittel und die Chassisstützen (2) eine gemeinsame Betriebsmittelversorgung (13) aufweisen. Dies kann z.B. ein Hydraulikaggregat mit Pumpe, Hydrauliktank, Ventilanordnung und Leitungen sein. Alternativ ist eine dezentrale Betriebsmittelversorgung möglich. Figur 3 zeigt eine solche Ausführung mit einem eigenen Hydraulikaggregat (13) der Chassisstütze (12). In entsprechender Weise kann auch die Betriebsmittelversorgung der Radhubmittel (11) und ihrer Antriebsmittel (22) ausgebildet sein.

Die Chassisstützen (12) sind als passive Stützen ausgebildet. Sie werden beim Nivellieren von der Nivelliersteuerung (8) derart gesteuert, dass sie vor oder während des Nivelliervorgangs auf den Boden (33) abgesenkt oder ausgefahren werden und stützenden Bodenkontakt haben. Das Absenken oder Ausfahren kann durch Eigengewicht oder über das Antriebsmittel (26) erfolgen. In der abgesenkten Stellung und dem Bodenkontakt sowie bei Betätigung der Hubvorrichtung (10) zum Nivellieren werden die Chassisstützen (12) kraftneutral geschaltet. Sie können dadurch der Höhenveränderung des Chassis (3) folgen. Bei dem nachfolgend erläuterten Nivelliersenken können die Chassisstützen (12) unter Beibehaltung ihres Bodenkontakts angehoben oder eingefahren werden. Wenn die gewünschte ausgerichtete Nivellierposition (32) erreicht ist, können die Chassisstützen (12) über das Arretierelement (28) arretiert werden.

Die Nivelliereinrichtung (2) kann ein in Figur 2 gezeigtes mobiles Stützelement (29) umfassen. Dieses wird frontseitig am Chassis (3), insbesondere am Frontende der Deichsel (16) angeordnet und stützt hier das Chassis (3) bzw. die Deichsel (16) von unten. Diese Abstützung ist beim Nivellieren vorhanden und kann wieder entfernt werden. Das mobile Stützelement (29) kann auch von einem am Chassis (3) bereits vorhandenen höhenverstellbaren Stützrad gebildet werden.

Figur 4 und 5 zeigen die Nivelliereinrichtung (2) mit den Radhubmitteln (11) und den Chassisstützen (12) in einer abstrahierten Darstellung und mit unterschiedlichen Bodenformen.

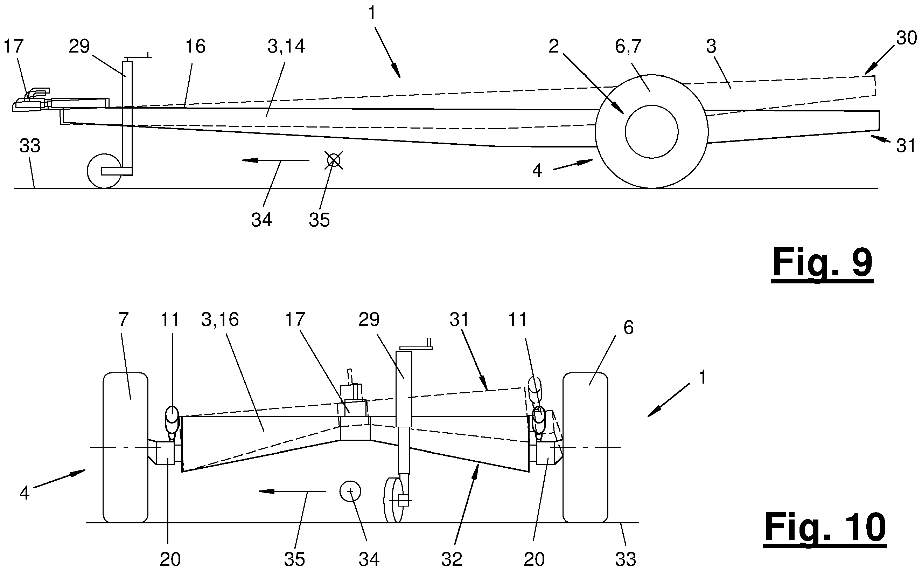

Figur 9 und 10 verdeutlichen eine bevorzugte Ausführung des Nivellierverfahrens. Hierbei wird die Nivelliereinrichtung (2) derart gesteuert, dass die Hubvorrichtung (10) bzw. die Anordnung der Radhubmittel (11) beim Nivellieren das Chassis (3) absenkt. Die beim Nivellieren ausgerichtete Nivellierposition (32) liegt dabei tiefer als die Ausgangsposition (30).

Figur 9 zeigt in einer abstrahierten Seitenansicht den in einer gesicherten Parkstellung abgestellten Anhänger (1) mit dem frontseitigen Stützelement (29). Das Stützelement (29) ist dabei derart in seiner Höhe fest eingestellt oder verstellbar, dass in der gestrichelt dargestellten Ausgangsposition (30) das Chassis (3) in der Fahrtrichtung (40) bzw. in der gleich gerichteten ersten Hauptrichtung (34) schräg nach unten zum Boden (33) hin geneigt ist. Im Achsbereich ist der Chassisabstand gegenüber dem Boden (33) größer als am Stützelement (29). Aus dieser bevorzugten Schrägstellung erfolgt das Nivellieren, welches zweistufig ausgebildet ist und durch Senkbewegungen des Chassis (3) gegenüber den Fahrzeugrädern (6,7) und dem Boden (33) bzw. durch ein Anheben der Fahrzeugräder (6,7) relativ zum Chassis (3) durchgeführt wird.

In der ersten Stufe erfolgt ein Ausrichten des Chassis (3) mit einem gewünschten Raumwinkel in der ersten Hauptrichtung (34), d.h. hier der Längsrichtung (40) des Chassis (3) bzw. der Fahrtrichtung. Durch synchrone Betätigung der beidseitigen Radhubmittel (11) wird das Chassis (3) abgesenkt und dabei frontseitig über das Stützelement (29) abgestützt. Wenn der gewünschte Raumwinkel 0° gegen die horizontale Raumrichtung ist, nimmt das Chassis (3) dann eine in Figur 9 mit durchgezogenen Strichen dargestellte Zwischenlage (31) ein. Die Chassis Oberkante ist dabei horizontal ausgerichtet.

In der Zwischenstellung (31) kann das Chassis (3) eine unerwünschte Winkelausrichtung, insbesondere Schräglage, in der anderen Hauptrichtung (35), d.h. hier der Querrichtung, haben. Figur 10 verdeutlicht dies in der Frontansicht zu Figur 9. Die Zwischenlage (31) ist hier gestrichelt dargestellt. Die rechte Chassisseite ist dabei **z.B.** höher als die linke.

Für den anschließenden zweiten Nivellierschritt werden die ein oder mehreren Radhubmittel (11) auf der einen zu verstellenden Chassisseite betätigt. Die Chassisstützen (12) auf der anderen und gegenüberliegenden Chassisseite können dabei arretiert werden. In der gezeigten Ausführungsform wird dabei die höhere Chassisseite abgesenkt.

Gemäß Figur 10 werden dabei das oder die rechten Radhubmittel (11) am Fahrzeugrad (6) betätigt und die in Figur 9 nicht dargestellten Chassisstützen (12) auf der anderen Chassisseite beim Fahrzeugrad (7) arretiert. In Figur 5 sind diese linken Chassisstützen (12) dargestellt. Bei diesem zweiten Nivellierschritt wird das Chassis (3) mit einem gewünschten Raumwinkel in der zweiten Hauptrichtung (35) ausgerichtet. Bei einer üblicherweise gewünschten Horizontalausrichtung des Chassis (3) und des Aufbaus (37) ist der besagte Raumwinkel auch in der zweiten Hauptrichtung (35) 0°. Bei den genannten Nivellierschritten erfolgt jeweils eine Ausrichtung im Raum und relativ zum Boden (33).

In der in Figur 10 mit durchgezogenen Strichen dargestellten zum Schluss ausgerichteten Nivellierpositionen (32) werden auch die anderen und z.B. rechten Chassisstützen (12) arretiert.

Bei Bedarf kann auch eine Arretierung der Radhubmittel (11) in der Nivellierposition (32) erfolgen.

In der ausgerichteten Nivellierpositionen (32) schwebt das Chassis (3) mit Abstand über dem Boden (33). Die Nivelliereinrichtung (2) kann hierfür entsprechend gesteuert sein.

Figur 9 und 10 zeigen den Nivelliervorgang bei einem ebenen und horizontalen Boden (33). In Figur 5 ist eine Nivellierung bei einem unebenen Boden (33) dargestellt. Figur 4 und 5 verdeutlichen außerdem die Anordnung und ggf. auch Bewegung der Chassisstützen (12).

In Abwandlung der vorbeschriebenen Ausführungsform kann aus der in Figur 10 gezeigten und in Querrichtung (35) schrägen Zwischenlage (31) statt des Absenkens des höheren Chassisbereichs ein Anheben des tieferen Chassisbereichs erfolgen. In diesem Fall werden bzgl. Figur 10 das oder die Radhubmittel (11) auf der linken Chassisseite bei dem oder den Fahrzeugrädern (7) betätigt und die Chassisstützen (12) auf der rechten Chassisseite bei dem oder den Fahrzeugrädern (6) arretiert.

In einer weiteren Abwandlung ist es möglich, die Reihenfolge der Nivellierschritte zu vertauschen und zuerst die Nivellierung in der zweiten Hauptachse (35) und anschließend die Nivellierung und Ausrichtung in der ersten Hauptachse (34) vorzunehmen.

Bei dieser Abwandlung wird das abgestellte Straßenfahrzeug (1) gesichert. Bei einer Ausbildung als Fahrzeuganhänger wird das frontseitige Stützelement (29), insbesondere Stützrad, abgesenkt, wobei das Chassis (3) nach vorn hin eine schräg abfallende Neigung einnimmt und der Frontbereich die tiefste Chassisposition bildet.

Aus dieser frontseitig abgestützten Ausgangsposition (30) wird anschließend der Nivellierprozess gestartet. Durch die Radhubmittel (11) werden die Fahrzeugräder (6,7) relativ zum Chassis (3) gehoben bis sie z.B. eine maximal angehobene Position als abgesenkte Zwischenlage (31) einnehmen. Die Chassisstützen (12) können dabei z.B. eingefahren sein. Das Chassis (3) und der Achskörper (19) können bis auf eine tiefste Position abgesenkt werden. Diese tiefste Position befindet sich mit Abstand über dem Untergrund (33). Bei diesem Absenken bleibt die nach vorn schräg abfallende Neigung des Chassis (3) erhalten.

Anschließend erfolgt das Nivellieren des Chassis (2) in dessen Querrichtung, die hierbei die erste Hauptrichtung (34) bildet. Z.B. werden das oder die Radhubmittel (11) an der tieferen Längsseite des Chassis (3) betätigt. Die betreffende Chassisseite wird unter Kontrolle der Nivelliersensorik (9) solange angehoben, bis in Querrichtung die gewünschte Winkellage eingenommen ist. Hierbei wird bevorzugt das Chassis (3) in Querrichtung in der Horizontalen ausgerichtet. Die eingenommene Chassislage und die Radhubmittel (11) werden arretiert.

Anschließend erfolgt das Nivellieren in der zweiten Hauptrichtung (35), diesmal der Längsachse oder Längsrichtung (4) des Chassis (3). Hierzu werden zunächst die Chassisstützen (12) im Heckbereich ausgefahren, bis sie einen detektierten Bodenkontakt haben. Anschließend werden diese Chassisstützen (12) noch um einen vorgegebenen Weg von z.B. 20 mm weiter ausgefahren.

Anschließend werden die frontseitigen Chassisstützen (12) bis zu einem detektierten Bodenkontakt ausgefahren und anschließend um einen weiteren vorgegebenen Weg zusätzlich ausgefahren. Dies kann der gleiche Weg wie bei den heckseitigen Chassisstützen (12) sein.

Anschließend erfolgt das Nivellieren des Chassis (3) in der zweiten Hauptrichtung (35) mittels der Chassisstützen (12). Hierbei können die vorderen und/oder hinteren Chassisstützen (12) ausgefahren und/oder eingefahren werden. Das Nivellieren in der Längsrichtung (40) erfolgt um den Achskörper (19) als Drehpunkt. Die Räder (6,7) bleiben in Bodenkontakt, wobei die Last des Straßenfahrzeugs (1) von der Achsanordnung (4) getragen wird. Das Nivellieren in der Längsrichtung (34) erfolgt unter Kontrolle der Nivelliersensorik (9), bis das Chassis (3) die gewünschte Winkellage in der Längsrichtung (40), insbesondere eine horizontale Ausrichtung, einnimmt. Die Chassisstützen (12) können in der gewünschten Nivellierposition bzw. Endposition mechanisch arretiert werden. Auch bei den Radhubmitteln (11) ist eine solche mechanische Arretierung möglich. Sie kann nach dem ersten Nivellierschritt und der Quernivellierung eingeschaltet werden.

Figur 12 zeigt eine vorerwähnte Variante der Achsanordnung (4) und der Hubvorrichtung (10). Die Achse (18) wird von zwei Halbachsen (43,44) gebildet. Diese können mit fluchtender Ausrichtung zueinander und rechtwinklig zur Längsachse (40) angeordnet sein. Alternativ ist eine Schrägausrichtung wie bei einer Schräglenkerachse möglich. Die Halbachsen (43,44) können jeweils eine Federung (5) der vorbeschriebenen Art, z.B. eine Achsfederung mit Gummischnüren oder Drehstäben, haben.

Die Halbachsen (43,44) weisen jeweils einen Achskörper (19) auf, der z.B. um eine zentrale Achse (48) drehbar am Chassis (3) gelagert ist. Alternativ ist eine Schwenkbewegung im Bogen um eine dezentrale Achse möglich. Bei einer Drehung oder Schwenkbewegung des Achskörpers (19) kann das jeweils zugehörige Fahrzeugrad (6,7) zum vorbeschriebenen Nivellieren relativ zum Chassis (3) gehoben oder gesenkt werden.

Für die Drehlagerung eines Achskörpers (19) um die zentrale Achse (48) ist z.B. ein äußeres Drehlager (45) an einer Achsaufnahme (15) an einem Längsträger (14) und ein inneres Drehlager (46) zwischen den Längsträgern (14) angeordnet. Die Halbachsen (43,44) können ein gemeinsames inneres Drehlager (46) haben. Dieses kann die Achskörper (19) der Halbachsen (43,44) verbinden und gegenseitig stützen. Es kann aber auch eine externe zentrale Abstützung haben, z.B. am Chassis (3) mittels Querträger oder am Boden des Aufbaus (37). Alternativ können die Achskörper (19) der Halbachsen (43,44) jeweils ein eigenes inneres Drehlager (46) mit externer Abstützung am besagten Aufbauboden oder am Chassis (3) haben. Die Achskörper (19) der Halbachsen (43,44) können eine Dreharretierung aufweisen. Sie können für die Fahrbewegung des Straßenfahrzeugs (1) bedarfsweise in einer definierten Drehstellung arretiert werden und zum Nivellieren gelöst werden.

Die Halbachsen (43,44) haben jeweils ein eigenes, individuell steuerbares und ggf. arretierbares Radhubmittel (11), welches den Achskörper (19) um die Achse (48) dreht. Das Radhubmittel (11) weist z.B. ein Antriebsmittel (22) in Form eines hydraulischen Zylinders (47) auf. Der Zylinder (47) kann am einen Ende am Chassis (3) über ein z.B. strebenartiges Abstützmittel (49) abgestützt sein. Er kann am anderen Ende am Achskörper (19) außermittig mit einem Beschlag (nicht dargestellt) angreifen. Die Radhubmittel (11) sind im Innenbereich des Chassis (3) zwischen den Längsträgern (14) angeordnet. Die Radhubmittel (11) können ansonsten in der vorbeschriebenen Weise ausgebildet, versorgt und gesteuert werden.

Figur 12 zeigt außerdem z.B. eine Fahrzeugvariante mit einem kurzen Chassis (3), wobei die Nivelliereinrichtung (2) nur zwei heckseitige Chassisstützen (12) aufweist. Alternativ können eine mehr als zwei Chassisstützen (12) vorhanden sein. Die Halbachsenanordnung kann auch bei längeren Chassis (3) eingesetzt werden. Ferner ist bei Halbachsen (43,44) eine Mehrfach-Achsausbildung, z.B. als Tandem- oder Trippelachse oder dgl., möglich.

Abwandlungen der vorbeschriebenen Ausführungsformen und ihrer Varianten sind in verschiedener Weise möglich. Insbesondere können die Merkmale der Ausführungsbeispiele und Varianten im Rahmen der Ansprüche beliebig miteinander kombiniert und ggf. auch vertauscht werden.

### BEZUGSZEICHENLISTE

- 1: Straßenfahrzeug, Anhänger
- 2: Nivelliereinrichtung
- 3: Chassis
- 4: Achsanordnung
- 5: Federung
- 6: Fahrzeugrad links
- 7: Fahrzeugrad rechts
- 8: Nivelliersteuerung
- 9: Nivelliersensorik
- 10: Hubvorrichtung
- 11: Radhubmittel
- 12: Chassisstütze
- 13: Betriebsmittelversorgung, Hydraulikaggregat
- 14: Längsträger
- 15: Achsaufnahme
- 16: Deichsel
- 17: Anhängerkupplung
- 18: Achse
- 19: Achskörper
- 20: Radschwinghebel
- 20': äußerer Schwinghebelarm
- 20": innerer Schwinghebelarm
- 21: Radaufnahme
- 22: Antriebsmittel
- 23: Zylinder hydraulisch
- 24: Stützfuß
- 25: Stützmittel
- 26: Antriebsmittel
- 27: Zylinder hydraulisch
- 28: Arretiermittel
- 29: Stützelement, Stützrad
- 30: Ausgangsposition
- 31: Zwischenlage
- 32: Nivellierposition
- 33: Boden
- 34: Hauptrichtung, Längsrichtung
- 35: Hauptrichtung, Querrichtung
- 36: Aufbaubereich
- 37: Aufbau
- 38: Zugang, Türe
- 39: Einstiegsbereich
- 40: Fahrtrichtung
- 41: Luftfederelement
- 42: Beschlag
- 43: Halbachse
- 44: Halbachse
- 45: Achslager außen
- 46: Achslager innen
- 47: Zylinder
- 48: zentrale Achse
- 49: Abstützmittel

## Patentansprüche

1. Nivelliereinrichtung für Straßenfahrzeuge (1), insbesondere Anhänger, wobei das Straßenfahrzeug (1) ein Chassis (3), eine Längsachse (40) und eine gefederte Achsanordnung (4) mit beidseitigen Fahrzeugrädern (6,7) in einer Einzelradaufhängung, aufweist, wobei die Nivelliereinrichtung (2) zum Ausrichten des Chassis (3) in einer gewünschten Winkellage im Raum vorgesehen und ausgebildet ist und wobei die Nivelliereinrichtung (2) eine Nivelliersteuerung (8), eine die Winkellage des Chassis (3) aufnehmende und mit der Nivelliersteuerung (8) verbundene Nivelliersensorik (9) und eine von der Nivelliersteuerung (8) ansteuerbare angetriebene Hubvorrichtung (10) für eine Höhenbewegung des Chassis (3) beim Nivellieren aufweist, wobei die Hubvorrichtung (10) mehrere von der Nivelliersteuerung (8) individuell steuerbare Radhubmittel (11) aufweist, die jeweils dazu ausgebildet sind, ein Fahrzeugrad (6,7) individuell relativ zum Chassis (3) zu heben und zu senken, wobei die Nivelliereinrichtung (2) mehrere von der Nivelliersteuerung (8) ansteuerbare, arretierbare sowie heb- und senkbare Chassisstützen (12) aufweist, wobei
die Nivelliersteuerung (8) programmierbar ist und einen oder mehrere Prozessoren nebst I/O-Schnittstellen und Datenspeichern aufweist, wobei das Nivellieren von den individuell steuerbaren Radhubmitteln (11) und auch von den Chassisstützen (12) durchführbar ist,
**dadurch gekennzeichnet, dass** die Nivelliereinrichtung (2) und die Nivelliersteuerung (8) dazu eingerichtet sind, dass beim Nivellieren das Chassis (3) durch die Nivelliersteuerung (8) derart angesteuert wird, dass das Chassis (3) mittels der Hubvorrichtung (10) und der Nivelliersensorik (9) ausgehend von einer bevorzugt frontseitig abgestützen Ausgangsposition (30) bis in eine Zwischenlage (31) abgesenkt und dabei mit einem gewünschten Raumwinkel in einer ersten Hauptrichtung (34) ausgerichtet wird, wobei anschließend das Chassis (3) bis in eine Nivellierposition (32) bewegt und dabei mit einem gewünschten Raumwinkel auch in einer zweiten Hauptrichtung (35) ausgerichtet wird und wobei die Chassisstützen (12) als passive Stützen ausgebildet sind, die beim Nivellieren derart gesteuert werden, dass sie vor oder bei dem Nivellieren auf den Boden (33) abgesenkt werden und beim Nivelliersenken der Hubvorrichtung (10) kraftneutral geschaltet und unter Beibehaltung ihres Bodenkontakts angehoben oder eingefahren sowie in der ausgerichteten Nivellierposition (32) arretiert werden.

2. Nivelliereinrichtung nach Anspruch 1, **dadurch gekennzeichnet, dass** die Nivelliereinrichtung (2) derart gesteuert ist, dass die Hubvorrichtung (10) beim Nivellieren das Chassis (3) absenkt und die ausgerichtete Nivellierposition (32) tiefer liegt als die Ausgangsposition (30), insbesondere mit Abstand über dem Boden (33) angeordnet ist.

3. Nivelliereinrichtung nach Anspruch 1 oder 2, **dadurch gekennzeichnet, dass** die Radhubmittel (11) jeweils dazu ausgebildet sind, zwischen Fahrzeugrad (6,7) und Chassis (3) angeordnet zu werden und zwischen diesen treibend zu wirken.

4. Nivelliereinrichtung nach einem der vorhergehenden Ansprüche, **dadurch gekennzeichnet, dass** die Radhubmittel (11) jeweils dazu ausgebildet sind, an einem Radschwinghebel (20) der Achsanordnung (4) oder an einem Achskörper (19) einer Halbachse der Achsanordnung (4) anzugreifen.

5. Nivelliereinrichtung nach einem der vorhergehenden Ansprüche, **dadurch gekennzeichnet, dass** die Radhubmittel (11) jeweils ein steuerbares Antriebsmittel (22), insbesondere einen bevorzugt hydraulischen Zylinder (23,47) oder ein Luftfederelement (41) aufweisen.

6. Nivelliereinrichtung nach einem der vorhergehenden Ansprüche, **dadurch gekennzeichnet, dass** die Chassisstützen (12) jeweils ein heb- und senkbares Stützmittel (25) und ein steuerbares Antriebsmittel (26), insbesondere einen bevorzugt hydraulischen Zylinder (27), sowie bevorzugt ein steuerbares Arretiermittel (28) aufweisen.

7. Nivelliereinrichtung nach Anspruch 5 und 6, **dadurch gekennzeichnet, dass** die Radhubmittel (11) und die Chassisstützen (12) eine gemeinsame Betriebsmittelversorgung (13), insbesondere eine gemeinsame Hydraulikversorgung, aufweisen.

8. Nivelliereinrichtung nach einem der vorhergehenden Ansprüche, **dadurch gekennzeichnet, dass** die Nivelliereinrichtung (2) ein mobiles Stützelement (29) umfasst, dass für eine von unten stützende Anordnung am Chassis (3), insbesondere am vorderen Chassisende, beim Nivellieren vorgesehen und ausgebildet ist.

9. Nivelliereinrichtung nach einem der vorhergehenden Ansprüche, **dadurch gekennzeichnet, dass** die Nivelliereinrichtung (2) und die Nivelliersteuerung (8) dazu eingerichtet sind, dass beim Nivellieren das Chassis (3) durch die Nivelliersteuerung (8) derart angesteuert wird, dass ausgehend von der frontseitig abgestützen Ausgangsposition (30) des Chassis (3) die Hubvorrichtung (10) das Chassis (3) bei mit Bodenkontakt abgesenkten und kraftneutral geschalteten Chassisstützen (12) bis in die Zwischenlage (31) absenkt, in der das Chassis (3) mit einem gewünschten Raumwinkel in der ersten Hauptrichtung (34) in Längsrichtung des Chassis (3) ausgerichtet ist, und dass anschließend durch Betätigen des oder der Radhubmittel (11) an einer Chassisseite und Arretierung der Chassisstütze(n) (12) an der anderen Chassisseite das Chassis (3) bis in die Nivellierposition (32) bewegt wird, in der das Chassis (3) mit einem gewünschten Raumwinkel auch in der zweiten Hauptrichtung (35) in Querrichtung des Chassis (3), ausgerichtet ist.

10. Nivelliereinrichtung nach einem der Ansprüche 1 bis 8, **dadurch gekennzeichnet, dass** die Nivelliereinrichtung (2) und die Nivelliersteuerung (8) dazu eingerichtet sind, dass beim Nivellieren das Chassis (3) durch die Nivelliersteuerung (8) derart angesteuert wird, dass ausgehend von der frontseitig abgestützen Ausgangsposition (30) des Chassis (3) die Hubvorrichtung (10) das Chassis (3) bis in die Zwischenlage (31) absenkt und das Chassis (3) mit einem gewünschten Raumwinkel in der ersten Hauptrichtung (34) in Querrichtung des Chassis (3) ausrichtet, wobei die Chassisstützen (12) anschließend auf Kontakt mit dem Untergrund (33) ausgefahren werden und dann das Chassis (3) in die Nivellierposition (32) bewegen, in der das Chassis (3) durch Betätigen des oder der Chassisstützen (12) mit einem gewünschten Raumwinkel auch in der zweiten Hauptrichtung (35) in Längsrichtung (40) des Chassis (3) ausgerichtet wird.

11. Straßenfahrzeug, insbesondere Anhänger, mit einem Chassis (3), einer Längsachse (40) und einer gefederten Achsanordnung (4) mit beidseitigen Fahrzeugrädern (6,7) mit einer Einzelradaufhängung, sowie mit einer Nivelliereinrichtung (2), **dadurch gekennzeichnet, dass** die Nivelliereinrichtung (2) nach einem der Ansprüche 1 bis 10 ausgebildet ist.

12. Straßenfahrzeug nach Anspruch 11, **dadurch gekennzeichnet, dass** die Radhubmittel (11) jeweils zwischen Fahrzeugrad (6,7) und Chassis (3) angeordnet sind und zwischen diesen treibend wirken, wobei bevorzugt die Chassisstützen (12) am Chassis (3) beidseits und in Längsrichtung verteilt, bevorzugt an einem Aufbaubereich (36), angeordnet sind.

13. Straßenfahrzeug nach Anspruch 11 oder 12, **dadurch gekennzeichnet, dass** die Achsanordnung (4) des Straßenfahrzeugs (1) eine oder mehrere Radlenkerachsen (18) mit ein- oder beidseitigen individuellen Radschwinghebeln (20) aufweist.

14. Verfahren zum Nivellieren eines Straßenfahrzeugs (1), insbesondere Anhängers, aufweisend ein Chassis (3), eine Längsachse (40) und eine gefederte Achsanordnung (4) mit beidseitigen Fahrzeugrädern (6,7) mit einer Einzelradaufhängung, wobei beim Nivellieren das Chassis (3) in einer gewünschte Winkellage im Raum ausgerichtet wird und wobei das Nivellieren mittels einer Nivelliereinrichtung (2) mit einer Nivelliersteuerung (8), einer die Ausrichtung Winkellage des Chassis (3) aufnehmenden und mit der Nivelliersteuerung (8) verbundenen Nivelliersensorik (9) und einer von der Nivelliersteuerung (8) angesteuerten angetriebene Hubvorrichtung (10) für eine Höhenbewegung des Chassis (3) beim Nivellieren erfolgt, wobei mehrere Radhubmittel (11) der Hubvorrichtung (10) jeweils ein Fahrzeugrad (6,7) individuell relativ zum Chassis (3) heben und senken, wobei von der Nivelliersteuerung (8) mehrere arretierbare sowie heb- und senkbare Chassisstützen (12) der Nivelliereinrichtung (2) angesteuert werden, wobei die Nivelliersteuerung (8) programmierbar ist und einen oder mehrere Prozessoren nebst I/O-Schnittstellen und Datenspeichern aufweist, wobei das Nivellieren von den individuell steuerbaren Radhubmitteln (11) und auch von den Chassisstützen (12) durchgeführt wird, **dadurch gekennzeichnet, dass** beim Nivellieren das Chassis (3) mittels der Hubvorrichtung (10) und der Nivelliersensorik (9) ausgehend von einer bevorzugt frontseitig abgestützen Ausgangsposition (30) bis in eine Zwischenlage (31) abgesenkt und dabei mit einem gewünschten Raumwinkel in einer ersten Hauptrichtung (34) ausgerichtet wird, wobei anschließend das Chassis (3) bis in eine Nivellierposition (32) bewegt und dabei mit einem gewünschten Raumwinkel auch in einer zweiten Hauptrichtung (35) ausgerichtet wird, wobei die als passive Stützen ausgebildeten Chassisstützen (12) beim Nivellieren derart gesteuert werden, dass sie vor oder bei dem Nivellieren auf den Boden (33) abgesenkt werden und beim Nivelliersenken der Hubvorrichtung (10) kraftneutral geschaltet und unter Beibehaltung ihres Bodenkontakts angehoben oder eingefahren sowie in der ausgerichteten Nivellierposition (32) arretiert werden.

15. Verfahren nach Anspruch 14, **dadurch gekennzeichnet, dass** das Chassis (3) mittels der Hubvorrichtung (10) aus der Ausgangsposition (30) in eine tiefer liegende Nivellierposition (32) abgesenkt und dabei ausgerichtet wird.

## Claims

1. Levelling device for road vehicles (1), in particular trailers, wherein the road vehicle (1) has a chassis (3), a longitudinal axis (40) and a suspended axle assembly (4) with vehicle wheels (6, 7) on both sides with an independent wheel suspension, wherein the levelling device (2) is provided and designed for orienting the chassis (3) in a desired angular position in space and wherein the levelling device (2) has a levelling controller (8), a levelling sensor system (9) which accommodates the angular position of the chassis (3) and is connected to the levelling controller (8), and a driven lifting apparatus (10), which can be controlled by the levelling controller (8), for vertical movement of the chassis (3) during levelling, wherein the lifting apparatus (10) has a plurality of wheel lifting means (11) which can be individually controlled by the levelling controller (8) and are each designed to lift and lower a vehicle wheel (6, 7) individually relative to the chassis (3), wherein the levelling device (2) has a plurality of chassis supports (12) which can be controlled by the levelling controller (8), locked and also lifted and lowered, wherein the levelling controller (8) is programmable and has one or more processors along with I/O interfaces and data memories, wherein the levelling of the individually controllable wheel lifting means (11) and also of the chassis supports (12) can be carried out, **characterized in that** the levelling device (2) and the levelling controller (8) are configured for the chassis (3) to be controlled by the levelling controller (8) during levelling in such a way that the chassis (3) is lowered by means of the lifting apparatus (10) and the levelling sensor system (9) starting from a preferably front-supported starting position (30) to an intermediate position (31) and is thereby oriented with a desired solid angle in a first main direction (34), wherein the chassis (3) is then moved to a levelling position (32) and is thereby oriented with a desired solid angle in a second main direction (35) too and wherein the chassis supports (12) are designed as passive supports, which are controlled during levelling in such a way that they are lowered to the ground (33) before or during levelling and, when the lifting apparatus (10) is lowered for levelling purposes, are in a force-neutral state and are raised or retracted while maintaining contact with the ground and also are locked in the oriented levelling position (32).

2. Levelling device according to Claim 1, **characterized in that** the levelling device (2) is controlled in such a way that the lifting apparatus (10) lowers the chassis (3) during levelling and the oriented levelling position (32) is lower than the starting position (30), in particular is arranged with a distance above the ground (33).

3. Levelling device according to Claim 1 or 2, **characterized in that** the wheel lifting means (11) are each designed to be arranged between the vehicle wheel (6, 7) and the chassis (3) and to act with a driving effect between them.

4. Levelling device according to any of the preceding claims, **characterized in that** the wheel lifting means (11) are each designed to engage on an oscillating wheel arm (20) of the axle assembly (4) or on an axle body (19) of a half-axle of the axle assembly (4).

5. Levelling device according to any of the preceding claims, **characterized in that** the wheel lifting means (11) each have a controllable drive means (22), in particular a preferably hydraulic cylinder (23, 47) or an air spring element (41).

6. Levelling device according to any of the preceding claims, **characterized in that** the chassis supports (12) each have a supporting means (25) which can be lifted and lowered and a drive means (26) which can be controlled, in particular a preferably hydraulic cylinder (27), and also preferably a controllable locking means (28).

7. Levelling device according to Claims 5 and 6, **characterized in that** the wheel lifting means (11) and the chassis supports (12) have a common operating medium supply (13), in particular a common hydraulic supply.

8. Levelling device according to any of the preceding claims, **characterized in that** the levelling device (2) comprises a mobile supporting element (29), which is provided and designed to be arranged on the chassis (3), in particular at the front chassis end, with support from below during levelling.

9. Levelling device according to any of the preceding claims, **characterized in that** the levelling device (2) and the levelling controller (8) are configured for the chassis (3) to be controlled by the levelling controller (8) during levelling in such a way that, with the chassis supports (12) lowered into contact with the ground and in a force-neutral state, the lifting apparatus (10) lowers the chassis (3) starting from the front-supported starting position (30) of the chassis (3) to the intermediate position (31), in which the chassis (3) is oriented with a desired solid angle in the first main direction (34) in the longitudinal direction of the chassis (3), and **in that**, by actuating the wheel lifting means (11) on a chassis side and locking the chassis support(s) (12) on the other chassis side, the chassis (3) is then moved to the levelling position (32), in which the chassis (3) is oriented with a desired solid angle in the second main direction (35) in the transverse direction of the chassis (3) too.

10. Levelling device according to any of Claims 1 to 8, **characterized in that** the levelling device (2) and the levelling controller (8) are configured for the chassis (3) to be controlled by the levelling controller (8) during levelling in such a way that the lifting apparatus (10) lowers the chassis (3) starting from the front-supported starting position (30) of the chassis (3) to the intermediate position (31) and orients the chassis (3) with a desired solid angle in the first main direction (34) in the transverse direction of the chassis (3), wherein the chassis supports (12) are then extended into contact with the underlying surface (33) and then move the chassis (3) to the levelling position (32), in which the chassis (3) is oriented with a desired solid angle in the second main direction (35) in the longitudinal direction (40) of the chassis (3) too by actuating the chassis support or chassis supports (12).

11. Road vehicle, in particular trailer, comprising a chassis (3), a longitudinal axis (40) and a suspended axle assembly (4) with vehicle wheels (6, 7) on both sides with an independent wheel suspension, and also comprising a levelling device (2), **characterized in that** the levelling device (2) is designed according to any of Claims 1 to 10.

12. Road vehicle according to Claim 11, **characterized in that** the wheel lifting means (11) are each arranged between the vehicle wheel (6, 7) and the chassis (3) and act with a driving effect between them, wherein the chassis supports (12) are preferably arranged on both sides of the chassis (3) and distributed in the longitudinal direction, preferably on a body region (36).

13. Road vehicle according to Claim 11 or 12, **characterized in that** the axle assembly (4) of the road vehicle (1) has one or more wheel-link axles (18) with individual oscillating wheel arms (20) on one or both sides.

14. Method for levelling a road vehicle (1), in particular a trailer, comprising a chassis (3), a longitudinal axis (40) and a suspended axle assembly (4) with vehicle wheels (6, 7) on both sides with an independent suspension, wherein the chassis (3) is oriented in a desired angular position in space during levelling and wherein the levelling is performed by means of a levelling device (2) having a levelling controller (8), a levelling sensor system (9) which accommodates the angular position of the chassis (3) and is connected to the levelling controller (8), and a driven lifting apparatus (10), which can be controlled by the levelling controller (8), for vertical movement of the chassis (3) during levelling, wherein a plurality of wheel lifting means (11) of the lifting apparatus (10) each lift and lower a vehicle wheel (6, 7) individually relative to the chassis (3), wherein a plurality of chassis supports (12) of the levelling device (2) which can be locked and also lifted and lowered are controlled by the levelling controller (8), wherein the levelling controller (8) is programmable and has one or more processors along with I/O interfaces and data memories, wherein the levelling of the individually controllable wheel lifting means (11) and also of the chassis supports (12) is carried out, **characterized in that** the chassis (3) is lowered by means of the lifting apparatus (10) and the levelling sensor system (9) starting from a preferably front-supported starting position (30) to an intermediate position (31) and is thereby oriented with a desired solid angle in a first main direction (34), wherein the chassis (3) is then moved to a levelling position (32) and is thereby oriented with a desired solid angle in a second main direction (35) too, wherein the chassis supports (12) which are designed as passive supports are controlled during levelling in such a way that they are lowered to the ground (33) before or during levelling and, when the lifting apparatus (10) is lowered for levelling purposes, are switched to a force-neutral state and are raised or retracted while maintaining contact with the ground and also are locked in the oriented levelling position (32).

15. Method according to Claim 14, **characterized in that** the chassis (3) is lowered from the starting position (30) to a lower levelling position (32) by means of the lifting apparatus (10) and is thereby oriented.

## Revendications

1. Dispositif de mise à niveau pour véhicules routiers (1), en particulier pour remorques, le véhicule routier (1) comprenant un châssis (3), un axe longitudinal (40) et un ensemble essieu à suspension (4) ayant des roues (6, 7) des deux côtés, avec une suspension de roue indépendante, le dispositif (2) de mise à niveau étant prévu et conçu pour orienter le châssis (3) dans une position angulaire souhaitée dans l'espace et le dispositif (2) de mise à niveau comprenant une commande (8) de mise à niveau, un système (9) à capteurs de niveau, qui enregistre la position angulaire du châssis (3) et qui est relié à la commande (8) de mise à niveau, et un dispositif de levage motorisé (10) commandé par la commande (8) de mise à niveau de façon à déplacer le châssis (3) en hauteur lors de la mise à niveau, le dispositif de levage (10) comprenant plusieurs moyens (11) de levage de roue aptes à être commandés individuellement par la commande (8) de mise à niveau, qui sont chacun conçus pour lever et abaisser individuellement une roue de véhicule (6, 7) par rapport au châssis (3), le dispositif (2) de mise à niveau comprenant plusieurs supports de châssis (12) aptes à être commandés, verrouillés et à être levés et abaissés par la commande (8) de mise à niveau, la commande (8) de mise à niveau étant programmable et comprenant un ou plusieurs processeurs ainsi que des interfaces E/S et des mémoires de données, la mise à niveau pouvant être effectuée par les moyens (11) de levage de roue aptes à être commandés individuellement ainsi que par les supports de châssis (12), **caractérisé en ce que** le dispositif (2) de mise à niveau et la commande (8) de mise à niveau sont conçus de telle sorte que, lors de la mise à niveau, le châssis (3) est commandé par la commande (8) de mise à niveau de telle sorte que le châssis (3) soit abaissé au moyen du dispositif de levage (10) et des capteurs de niveau (9) à partir d'une position de départ (30), de préférence soutenue à l'avant, jusqu'à une position intermédiaire (31), et soit ainsi orienté avec une angulation fixe souhaitée dans une première direction principale (34), le châssis (3) étant ensuite déplacé jusqu'à une position de mise à niveau (32) et étant également orienté avec une angulation fixe souhaitée dans une deuxième direction principale (35), les supports de châssis (12) étant conçus sous forme de supports passifs qui sont commandés lors de la mise à niveau de telle sorte qu'ils soient abaissés sur le sol (33) avant ou pendant la mise à niveau et que, lors de l'abaissement du dispositif de levage (10) pour la mise à niveau, ils soient commutés en mode de force neutre et, tout en maintenant leur contact avec le sol, ils soient relevés ou rentrés et bloqués dans la position de mise à niveau alignée (32).

2. Dispositif de mise à niveau selon la revendication 1, **caractérisé en ce que** le dispositif (2) de mise à niveau est commandé de telle sorte que le dispositif de levage (10) abaisse le châssis (3) lors de la mise à niveau et que la position de mise à niveau alignée (32) soit située plus bas que la position initiale (30), en particulier à une certaine distance au-dessus du sol (33).

3. Dispositif de mise à niveau selon la revendication 1 ou la revendication 2, **caractérisé en ce que** les moyens (11) de levage de roue sont chacun conçus pour être agencés entre la roue du véhicule (6, 7) et le châssis (3), et pour agir entre ceux-ci en tant que moyen d'entraînement.

4. Dispositif de mise à niveau selon l'une des revendications précédentes, **caractérisé en ce que** les moyens (11) de levage de roue sont chacun conçus pour agir sur un levier de suspension de roue (20) de l'ensemble essieu (4) ou sur un corps d'essieu (19) d'un demi-essieu de l'ensemble essieu (4).

5. Dispositif de mise à niveau selon l'une des revendications précédentes, **caractérisé en ce que** les moyens (11) de levage de roue comprennent chacun un moyen d'entraînement commandable (22), en particulier un vérin (23, 47) de préférence hydraulique ou un élément à ressort pneumatique (41).

6. Dispositif de mise à niveau selon l'une des revendications précédentes, **caractérisé en ce que** les supports de châssis (12) comportent chacun un moyen de support (25) apte à être levé et abaissé et un moyen d'entraînement (26) commandable, en particulier un vérin (27) de préférence hydraulique, ainsi que, de préférence, un moyen de blocage (28) commandable.

7. Dispositif de mise à niveau selon les revendications 5 et 6, **caractérisé en ce que** les moyens (11) de levage de roue et les supports de châssis (12) sont équipés d'une alimentation commune en fluide d'actionnement (13), en particulier d'une alimentation hydraulique commune.

8. Dispositif de mise à niveau selon l'une des revendications précédentes, **caractérisé en ce que** le dispositif (2) de mise à niveau comprend un élément de support mobile (29) qui est prévu et conçu pour être agencé sur le châssis (3), en particulier à l'extrémité avant du châssis, de façon à réaliser un soutien par le bas lors de la mise à niveau.

9. Dispositif de mise à niveau selon l'une des revendications précédentes, **caractérisé en ce que** le dispositif (2) de mise à niveau et la commande (8) de mise à niveau sont conçus de telle sorte que, lors de la mise à niveau, le châssis (3) soit commandé par la commande (8) de mise à niveau de telle manière que, à partir de la position initiale (30) du châssis (3), avec appui à l'avant, le dispositif de levage (10) abaisse le châssis (3) jusqu'à la position intermédiaire (31) lorsque les supports de châssis (12) sont abaissés en contact avec le sol et commutés en force neutre, position intermédiaire dans laquelle le châssis (3) est orienté dans la première direction principale (34) souhaitée dans la direction longitudinale du châssis (3), et qu'ensuite, en actionnant le ou les moyens (11) de levage de roue sur un côté du châssis et en bloquant le ou les supports de châssis (12) sur l'autre côté du châssis, le châssis (3) soit déplacé jusqu'à la position de mise à niveau (32), dans laquelle le châssis (3) est orienté avec une angulation fixe souhaitée également dans la deuxième direction principale (35) dans la direction transversale du châssis (3).

10. Dispositif de mise à niveau selon l'une des revendications 1 à 8, **caractérisé en ce que** le dispositif (2) de mise à niveau et la commande (8) de mise à niveau sont conçus de telle sorte que, lors de la mise à niveau, le châssis (3) soit commandé par la commande (8) de mise à niveau de telle manière que, partant de la position initiale (30) du châssis (3) avec appui à l'avant, le dispositif de levage (10) abaisse le châssis (3) jusqu'à la position intermédiaire (31) et aligne le châssis (3) avec une angulation fixe souhaitée dans la première direction principale (34) dans la direction transversale du châssis (3), les supports de châssis (12) étant ensuite déployés jusqu'à venir en contact avec le sol (33) et amener le châssis (3) en position (32) de mise à niveau, dans laquelle le châssis (3) est aligné dans la direction longitudinale (40) du châssis (3) dans la deuxième direction principale (35) avec une angulation fixe souhaitée, en actionnant le ou les supports de châssis (12).

11. Véhicule routier, en particulier remorque, comprenant un châssis (3), un axe longitudinal (40) et un ensemble essieu à suspension (4) ayant des roues (6, 7) des deux côtés, avec une suspension de roue indépendante, ainsi qu'avec un dispositif (2) de mise à niveau, **caractérisé en ce que** le dispositif (2) de mise à niveau est conçu selon l'une des revendications 1 à 10.

12. Véhicule routier selon la revendication 11, **caractérisé en ce que** les moyens (11) de levage de roue sont agencés chacun entre la roue de véhicule (6, 7) et le châssis (3) et agissent de manière motrice entre ceux-ci, les supports de châssis (12) étant de préférence agencés sur le châssis (3) des deux côtés et répartis dans la direction longitudinale, de préférence au niveau d'une zone de carrosserie (36).

13. Véhicule routier selon la revendication 11 ou la revendication 12, **caractérisé en ce que** l'ensemble essieu (4) du véhicule routier (1) comporte un ou plusieurs essieux à bras de suspension (18) avec des leviers oscillants individuels (20) sur un côté ou sur les deux côtés.

14. Procédé de mise à niveau d'un véhicule routier (1), en particulier d'une remorque, comprenant un châssis (3), un axe longitudinal (40) et un ensemble essieu à suspension (4) ayant des roues (6, 7) des deux côtés, avec une suspension de roues indépendante, le châssis (3) étant orienté dans une position angulaire souhaitée dans l'espace lors de la mise à niveau, et la mise à niveau étant effectuée au moyen d'un dispositif (2) de mise à niveau comprenant une commande (8) de mise à niveau, un système (9) à capteurs de niveau qui enregistre la position angulaire du châssis (3) et qui est relié à la commande (8) de mise à niveau, et un dispositif de levage motorisé (10) commandé par la commande (8) de mise à niveau et entraîné de façon à déplacer le châssis (3) en hauteur lors de la mise à niveau, plusieurs moyens (11) de levage de roue du dispositif de levage (10) levant et abaissant individuellement une roue de véhicule (6, 7) par rapport au châssis (3), plusieurs supports de châssis (12) du dispositif (2) de mise à niveau étant aptes à être bloqués, levés et abaissés sont commandés par la commande (8) de mise à niveau, la commande (8) de mise à niveau étant programmable et comprenant un ou plusieurs processeurs ainsi que des interfaces E/S et des mémoires de données, la mise à niveau étant effectuée par les moyens (11) de levage de roue commandables individuellement ainsi que par les supports de châssis (12), **caractérisé en ce que** lors de la mise à niveau, le châssis (3) est abaissé au moyen du dispositif de levage (10) et des capteurs de niveau (9) à partir d'une position de départ (30), de préférence avec appui à l'avant, jusqu'à une position intermédiaire (31) et est ainsi orienté avec une angulation fixe souhaitée dans une première direction principale (34), le châssis (3) étant ensuite déplacé jusqu'à une position de mise à niveau (32) et étant également orienté dans une deuxième direction principale (35) avec une angulation fixe souhaitée, les supports de châssis (12), conçus sous forme de supports passifs, étant commandés lors de la mise à niveau de telle sorte qu'ils s'abaissent sur le sol (33) avant ou pendant la mise à niveau et que, lors de l'abaissement du dispositif de levage (10), ils soient commutés en mode force neutre et, tout en maintenant leur contact avec le sol, ils soient relevés ou rentrés et bloqués dans la position de mise à niveau alignée (32).

15. Procédé selon la revendication 14, **caractérisé en ce que** le châssis (3) est abaissé au moyen du dispositif de levage (10) de la position initiale (30) à une position de mise à niveau (32) plus basse et est ainsi aligné.
